(19) Europäisches Patentamt
European Patent Office
Office européen des brevets

(11) **EP 4 079 385 A1**

(12) **EUROPÄISCHE PATENTANMELDUNG**

(43) Veröffentlichungstag:
**26.10.2022  Patentblatt 2022/43**

(21) Anmeldenummer: **22178959.7**

(22) Anmeldetag: **12.06.2020**

(51) Internationale Patentklassifikation (IPC):
**B01D 1/00** *(2006.01)*      **B01D 1/22** *(2006.01)*

(52) Gemeinsame Patentklassifikation (CPC):
**B01D 1/228; B01D 1/0082; B01D 1/225; B01D 1/226**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **12.06.2019  EP 19179678**

(62) Dokumentnummer(n) der früheren Anmeldung(en) nach Art. 76 EPÜ:
**20731131.7 / 3 983 102**

(71) Anmelder:
• **Aurotec GmbH**
**4844 Regau (AT)**
• **Buss-SMS-Canzler GmbH**
**4133 Pratteln (CH)**

(72) Erfinder:
• **ZIKELI, Stefan**
**4844 Regau (AT)**
• **KITZLER, Hannes**
**4850 Timelkam (AT)**
• **ZAUNER, Philipp**
**4840 Vöcklabruck (AT)**
• **AIGNER, Paul**
**4860 Lenzing (AT)**
• **LONGIN, Michael**
**8983 Bad Mitterndorf (AT)**
• **NAEF, Rainer**
**8953 Dietikon (AT)**

(74) Vertreter: **SONN Patentanwälte OG**
**Riemergasse 14**
**1010 Wien (AT)**

Bemerkungen:
Diese Anmeldung ist am 14.06.2022 als Teilanmeldung zu der unter INID-Code 62 erwähnten Anmeldung eingereicht worden.

(54) **DÜNNSCHICHTBEHANDLUNGSVORRICHTUNG**

(57)   Die vorliegende Erfindung betrifft eine Dünnschichtbehandlungsvorrichtung zum Behandeln von viskosem Material. Die erfindungsgemässe Dünnschichtbehandlungsvorrichtung umfasst

ein zur Horizontalen um maximal 20° geneigt ausgerichtetes Prozessgehäuse (12) mit einem beheizbaren und/oder kühlbaren Gehäusemantel (14), welcher einen einen Materialbehandlungsraum (160) bildenden Gehäuseinnenraum (16) umschliesst,

einen in einer Einlasszone (18) des Prozessgehäuses (12) angeordneten Einlassstutzen (20) zum Einführen des zu behandelnden Materials in den Materialbehandlungsraum (160),

einen in einer Auslasszone (22) des Prozessgehäuses (12) angeordneten Auslassstutzen (24) zum Austragen des behandelten Materials aus dem Materialbehandlungsraum (160), und

eine im Materialbehandlungsraum (160) angeordnete und sich koaxial erstreckende, antreibbare Rotorwelle (44) zur Erzeugung eines Materialfilms auf der Gehäusemantelinnenfläche (15) und zur Förderung des Materials in Richtung zu einer Auslasszone (22) hin.

Erfindungsgemäss umfasst die Rotorwelle (44) mindestens ein auf dem Rotorwellenkörper (50) angeordnetes Auftriebselement (56), welches derart ausgestaltet ist, um während der Rotation der Rotorwelle (44) eine Auftriebskraft in Richtung zum Rotorwellenkörper (50) hin zu erzeugen.

Fig. 1

**Beschreibung**

Die Erfindung betrifft eine Dünnschichtbehandlungsvorrichtung zum Behandeln von viskosem Material gemäss dem Oberbegriff des Anspruchs 1.

Gattungsbildende Dünnschichtbehandlungsvorrichtungen sind dem Fachmann bekannt und werden etwa in der Destillation, der Konzentration, der Entgasung und der Trocknung unterschiedlicher Materialien eingesetzt. Des Weiteren werden Dünnschichtbehandlungsvorrichtungen auch zum Mischen eingesetzt sowie für Reaktionen, bei welchen mindestens temporär ein viskoser Zustand vorliegt, insbesondere etwa für Polymerisationsreaktionen. Der Betrieb von Dünnschichtbehandlungsvorrichtungen erfolgt überwiegend kontinuierlich.

Eine Untergruppe von Dünnschichtbehandlungsvorrichtungen stellen die Dünnschichtverdampfer dar. Diese basieren auf dem Prinzip, dass mittels Verteilung von Material auf der Innenfläche einer temperierbaren Gehäusewand eine hohe Wärmestromdichte erzielt werden kann, wodurch letztendlich eine grosse Verdampfungsleistung und hohe Eindampfverhältnisse in einem Durchlauf ermöglicht werden können.

Zur Verteilung des Materials in einer dünnen Schicht können insbesondere mit Wischerelementen bestückte Rotoren vorgesehen werden. Entsprechende Dünnschichtverdampfer, die zusätzlich mit einer Materialförderung ausgestattet sind, sind dem Fachmann unter der Bezeichnung Filmtruder bekannt.

Eine Dünnschichtbearbeitungsvorrichtung in Form eines Filmtruders wird etwa in der CH 523 087 beschrieben, gemäss welcher in einer heizbaren und/oder kühlbaren Behandlungskammer koaxial ein antreibbarer Rotor angeordnet ist, welcher einen Rohrkörper aufweist, auf dessen Umfang geneigte Flügel gleichmässig verteilt sind und auf dem im Übrigen axial in die Nähe der Innenfläche des Gehäusemantels reichende oder die Innenfläche berührende Wischerblätter angeordnet sind. Im Betrieb wird das zu behandelnde Material durch die in Rotation versetzten Wischerblätter erfasst und in dünner Schicht auf der Innenwand des Gehäuses verteilt, während die schräg gestellten Flügelteile dem erfassten Material eine zum Auslass hin gerichtete Bewegungskomponente erteilen.

DE 100 50 997 C1 beschreibt einen weiteren Dünnschichtverdampfer. Dabei ist in einer Heizkammer eine mit Abstreifelementen versehene Welle zum Verteilen der eingebrachten Stoffe an der Innenseite des Gehäuses angeordnet, wobei die Welle einen Lagerzapfen aufweist, der in einer Lagerbuchse gleitend gelagert ist.

Nebst den im Betrieb üblicherweise vertikal ausgerichteten Dünnschichtverdampfern sind dem Fachmann weitere Dünnschichtbearbeitungsvorrichtungen bekannt, wie etwa horizontal ausgerichtete Dünnschichttrockner.

Ein entsprechender Dünnschichttrockner wird in DE 41 17 630 beschrieben, gemäss welcher innerhalb eines Wärmetauscherrohrs jeweils ein langgestreckter Flügelrotor angeordnet ist, der das zu trocknenden Material an die Innenumfangsfläche des Wärmetauscherrohrs befördert. Um eine hohe Biegesteifigkeit des Flügelrotors sicherzustellen, wird eine korbähnliche Konstruktion um den Flügelrotor vorgeschlagen, umfassend in Längsrichtung des Flügelrotors verlaufende Spannanker und Befestigungsflansche, zwischen welchen die Spannanker eingespannt sind. Um die Rückstellkraft bei einer Durchbiegung des Flügelrotors zusätzlich zu erhöhen, sind Radialabstandshalter gleichmässig über die Länge des Flügelrotors zwischen den Befestigungsflanschen verteilt. Ausserdem ist der Flügelrotor mit einer Vielzahl Zusatzflügel versehen, welche an den Spannankern des Flügelrotors schwenkbar gelagert sind und das Material auf die Innenumfangsfläche aufstreichen. Die Zusatzflügel tragen ebenfalls zur Aussteifung der Korbkonstruktion bei. Allerdings können sie keine radiale Kraft gegen die Achse des Rotorflügels ausüben, weil sie schwenkbar gelagert sind und somit eine radiale Kraft nicht übertragen können. Diese Konstruktion bedeutet einen zusätzlichen Aufwand beim Aufbau des Reaktors und je nach zu behandelndem Material eine Behinderung des Flüssigkeitsstroms vom Eintragsende zum Austragsende.

WO 93/11396 bezieht sich auf eine Verdampfereinrichtung zur Wärmebehandlung, insbesondere zur Trocknung von Schlämmen, mit einem beheizbaren hohlzylindrischen und in etwa horizontal ausgerichteten Verdampferkörper, der an einem Ende einen Produkteinlass und am anderen Ende einen Produktauslass aufweist. Im vom Produkt beaufschlagten Innenraum des Verdampferkörpers ist ein mit im Wesentlichen radial ausgerichteten Flügeln versehener, von außen antreibbarer Rotor angeordnet.

Weiter wird in der WO 2004/041420 eine Dünnschichtbehandlungsvorrichtung in Form einer horizontal angeordneten Mischvorrichtung offenbart, in der die zu mischenden Komponenten auf der Innenwand eines hohlzylindrischen Körpers in einer dünnen Schicht verteilt werden, wobei die Komponenten durch Zusammenwirken der Rotorblätter mit der Innenwand des hohlzylindrischen Körpers vermischt werden.

GB 952,101 A offenbart eine Verdampfungsvorrichtung umfassend ein horizontales zylindrisches Gefäss, welches eine Verdampfungskammer definiert. Die Verdampfungsvorrichtung weist ferner einen mit Rührelementen versehenen Rührer auf, welcher von einem konzentrisch zur Längsachse des Gefässes angeordneten Achselement getragen ist. Der Rührer und seine Antriebseinrichtung sind so ausgelegt, dass das zu behandelnde Material bei der Drehung des Rührers gegen die Wand der Verdampfungskammer geschleudert wird. In einer Ausführungsform umfasst der Rührer sechs radial verlaufende, in Umfangsrichtung gleichmässig verteilt angeordnete Arme. Die Arme tragen axial verlaufende, streifenförmige Rührelemente, die an ihren Enden einstellbar angebracht sind und nach innen gedreht sind.

Die im Stand der Technik beschriebenen horizontalen Dünnschichtbehandlungsvorrichtungen sind auf Prozesse ausgerichtet, in denen das zu behandelnde Material in einen trockenen, insbesondere granulierbaren Zustand gebracht wird. Für gewisse Anwendungen ist es erforderlich, die Dünnschichtbehandlungsvorrichtung mit einer langen Rotorwelle auszustatten. So weisen etwa Vorrichtungen, die darauf ausgelegt sind, Cellulose in Lösung zu bringen und aus dieser z.B. sogenannte Lyocell-Fasern herzustellen, relativ lange Rotorwellen in der Grössenordnung von 10 bis 15 m alleine in der Prozesszone auf. Dies, weil aus der in die Vorrichtung eingespeisten Cellulose-Suspension zuerst Wasser verdampft und die derart eingedampfte Suspension dann homogenisiert werden muss, um die angestrebte Qualität der Lösung zu erhalten. Solche für das Lyocell-Verfahren ausgerichteten Vorrichtungen werden üblicherweise, wie im Falle des Filmtruders, vertikal gebaut, um zu gewährleisten, dass aufgrund der Gravitation eine zusätzliche Förderkomponente auftritt und letztendlich auch eine gute Abreinigung der Behandlungsfläche der Vorrichtung erzielt wird. Allerdings bedingt die vertikale Bauweise, dass sehr hohe Räumlichkeiten zur Verfügung stehen, in denen die Vorrichtung untergebracht werden können. Die Produktzufuhr muss entsprechend ebenfalls eingestellt werden, da die Einspeisestelle bei den bekannten, vertikal ausgerichteten Vorrichtungen oben angeordnet ist. Gleiches gilt auch für die Betriebsmittel wie z.B. Antrieb, Beheizung und Vakuum.

Lyocell ist ein von der BISFA (The International Bureau for the Standardization of Man-Made Fibres) vergebener generischer Gattungsname für Cellulosefasern, welche aus Cellulose ohne Ausbildung eines Derivates hergestellt werden. Das Lyocell-Verfahren erfordert das Auflösen von Cellulose ohne diese chemisch zu verändern (siehe Zhang et al., BioResources 13(2), 2018: 4577-4592). Dieser Lösungsprozess kann ein- oder mehrstufig vorgenommen werden.

Zweistufige Verfahren, wie z.B. in der DE 4441468 beschrieben, haben den Nachteil, dass sich die Einstellung der Wasser-, Lösungsmittel- und Cellulose-Konzentration in und zwischen den beiden Stufen, welche in unterschiedlichen Geräten durchgeführt werden, nämlich einem Verdampfer zur Voreindampfung und einem horizontalen Schneckenlöser, schwierig gestaltet und ungleichmäßig hergestellte Cellulose-Lösungen das Ergebnis sind und welche für den weiteren Verarbeitungsschritt des Spinnens schlechte Eigenschaften aufweisen. Die WO 2013/156489 A1 beschreibt ein ähnliches zweistufiges Verfahren, wobei eine Grundsubstanz für Formkörper, z.B. eine Celluloselösung durch Bearbeitung der Ausgangssubstanzen in einem vertikalen Dünnschichtverdampfer und einem Dickschichtlöser (Knetreaktor) bearbeitet werden.

Um eine zweistufige Apparatur zu vermeiden, müsste in einem einstufigen Verfahren der gesamte Lösungsprozess in einer einzigen Apparatur abgeschlossen werden können. Hierzu sind in der Regel groß-dimensionierte Vorrichtungen notwendig. Beispiele zur Herstellung von Cellulose-Lösungen durch Verwendung von vertikalen Dünnschichtbehandlungsvorrichtungen sind in EP 0356419 A2, in WO 94/06530 A1 und in WO 2008/154668 A1 beschrieben.

Aufgrund des apparativen und baulichen Aufwands, der mit der vertikalen Bauweise einhergeht, wäre eine horizontale Ausrichtung der Dünnschichtbehandlungsvorrichtung prinzipiell erstrebenswert. Allerdings ist gerade in Vorrichtungen mit einer relativ langen Rotorwelle aufgrund des Eigengewichts und der damit einhergehenden Durchbiegung der Rotorwelle aufgrund der Schwerkraft ein störungsfreier und prozesstechnisch zur vertikalen Aufstellung identischer Betrieb nur schwer zu bewerkstelligen.

Aufgabe der vorliegenden Erfindung ist es daher, eine im Wesentlichen horizontale Dünnschichtbehandlungsvorrichtung zur Verfügung zu stellen, welche selbst beim Vorliegen einer relativ langen Rotorwelle einen störungsfreien Betrieb gewährleistet.

Eine weitere Aufgabe der vorliegenden Erfindung ist es, einen effektiven Auflösungsprozess von Cellulose zu liefern, in dem Cellulose rasch aber vollständig in einer einzigen Vorrichtung, insbesondere einer Dünnschichtbehandlungsvorrichtung, vom Feststoff in den Lösungszustand überführt wird. Vorzugsweise ist dieser Prozess in einer im Wesentlichen horizontalen Dünnschichtbehandlungsvorrichtung möglich.

Die erste Aufgabe wird gelöst durch die Dünnschichtbehandlungsvorrichtung gemäss Anspruch 1. Bevorzugte Ausführungsformen werden in den abhängigen Ansprüchen wiedergegeben.

Gemäss Anspruch 1 betrifft die Erfindung somit eine Dünnschichtbehandlungsvorrichtung zum Behandeln von viskosem Material umfassend

ein zur Horizontalen um maximal 20° geneigt ausgerichtetes Prozessgehäuse mit einem beheizbaren und/oder kühlbaren Gehäusemantel, welcher einen sich in axialer Richtung erstreckenden rotationssymmetrischen und einen Materialbehandlungsraum bildenden Gehäuseinnenraum umschliesst,

einen in einer Einlasszone des Prozessgehäuses angeordneten Einlassstutzen zum Einführen des zu behandelnden Materials in den Materialbehandlungsraum,

einen in einer Auslasszone des Prozessgehäuses angeordneten Auslassstutzen zum Austragen des behandelten Materials aus dem Materialbehandlungsraum, und

eine im Gehäuseinnenraum angeordnete und sich koaxial erstreckende, antreibbare Rotorwelle zur Erzeugung eines Materialfilms auf der Gehäusemantelinnenfläche und zur Förderung des Materials in Richtung von der Einlasszone über eine Prozesszone zu einer Auslasszone hin.

Die Rotorwelle umfasst dabei einen zentralen Rotorwellenkörper und auf dessen Umfang angeordnete Streichelemente, deren radial äusserstes Ende von der Gehäusemantelinnenfläche beabstandet ist. Diese Streichelemente sind in der Regel in mehreren über den Umfang der Rotorwelle verteilten, axial verlaufenden Blattreihen angeordnet, deren Anzahl vom Umfang des Rotorwellenkörpers abhängig ist.

Gemäß der Erfindung umfasst die Rotorwelle mindestens ein auf dem Rotorwellenkörper angeordnetes Auftriebselement, welches derart ausgestaltet ist, um während der Rotation der Rotorwelle eine Auftriebskraft in Richtung zum Rotorwellenkörper hin zu erzeugen, wie dies weiter unten beschrieben wird.

Das Prozessgehäuse, d.h. dessen Längsachse, ist gemäss der vorliegenden Erfindung zur Horizontalen um maximal 20°, vorzugsweise um maximal 10° geneigt und besonders bevorzugt horizontal, d.h. mit einem Neigungswinkel von mindestens annähernd 0°, ausgerichtet. Aufgrund der im Wesentlichen horizontalen Ausrichtung des Prozessgehäuses der erfindungsgemässen Vorrichtung ist dieses in der Regel in einem der Einlasszone entsprechenden proximalen Endbereich und in einem der Auslasszone entsprechenden distalen Endbereich auf entsprechenden Stützlagern abgestützt. Zudem ist die im Gehäuseinnenraum angeordnete Rotorwelle auf entsprechenden Drehlagern im proximalen und im distalen Endbereich gelagert, wobei vorzugsweise das Drehlager im proximalen Endbereich sowohl radiale als auch axiale Kräfte aufnimmt und im distalen Endbereich als Radiallager ausgebildet ist. Wie weiter unten ausgeführt wird, ist mindestens ein Auftriebselement vorzugweise in der Rotormitte, also dem Bereich der maximalen Durchbiegung, angeordnet.

Erfindungsgemäß wurde überraschenderweise gefunden, dass durch das auf dem Rotorwellenkörper angeordnete Auftriebselement bzw. die Auftriebselemente einer durch die Schwerkraft bedingte Durchbiegung der Rotorwelle wirksam entgegengewirkt werden kann. Somit kann ein störungsfreier Betrieb selbst für Vorrichtungen mit relativ langer Rotorwelle, wie sie insbesondere für das Lyocell-Verfahren zum Einsatz kommen, auch bei horizontaler Ausrichtung der Vorrichtung gewährleistet werden. Für eine Dünnschichtbehandlungsvorrichtung, in welcher sich der den Materialbehandlungsraum bildende Gehäuseinnenraum über eine Länge von wenigstens 5 m erstreckt, vorzugsweise wenigstens 8 m, ist die erfindungsgemäß erhaltene technische Wirkung somit besonders ausgeprägt. So können selbst für diese Längen Spalte zwischen Streichelementen und Gehäusemantelinnenfläche eingestellt werden, die denjenigen eines (vertikal ausgerichteten) Filmtruders vergleichbar sind.

Weiter wurde im Zuge der vorliegenden Erfindung gefunden, dass auch bei horizontalen Vorrichtungen eine ausreichend gute Förderung sehr hochviskoser Materialien erzielt werden kann, wenn die Rotorwelle mit entsprechenden Förderelementen bestückt wird. Die auf dem Umfang des Rotorwellenkörpers angeordneten Streichelemente sind somit mindestens teilweise als Förderelemente ausgestaltet.

In der Regel liegt ein Teil der Streichelemente als Förderelemente und ein weiterer Teil der Streichelemente als Verteilelemente vor. Als "Verteilelemente" werden im Kontext der vorliegenden Erfindung Streichelemente bezeichnet, die das Material primär auf der Gehäusemantelinnenfläche verteilen, während "Förderelemente" Streichelemente darstellen, die dem Material primär eine Förderkomponente zum Auslassstutzen hin verleihen. Dabei ist auch denkbar, dass Streichelemente sowohl fördernd als auch verteilend wirken; solche Streichelemente werden im Kontext der vorliegenden Erfindung als "Förderverteilelemente" bezeichnet.

Verteilelemente und Förderelemente unterscheiden sich in der Regel dadurch, dass die Scherkante der Verteilelemente bezogen zur Achsrichtung jeweils einen wenigstens annähernd förderneutralen Winkel einschliesst, während die Scherkante der Förderelemente bezogen zur Achsrichtung derart angewinkelt ist, dass dem Material eine Förderkomponente in Richtung zum Auslassstutzen verliehen wird. In der Regel schliesst die Scherkante der Verteilelemente somit bezogen zur Achsrichtung jeweils einen Winkel ein, der kleiner ist als der von der Scherkante der Förderelemente bezogen zur Achsrichtung jeweils eingeschlossene Winkel. Vorzugsweise beträgt für ein Verteilelement der von der Scherkante bezogen zur Achsrichtung jeweils eingeschlossene Winkel weniger als 5° und im speziellen Fall wenigstens annähernd 0°. Demgegenüber beträgt der von der Scherkante eines Förderelements bezogen zur Achsrichtung jeweils eingeschlossene Winkel mehr als 15°.

Aufgrund des Vorliegens der Förderelemente wird einerseits gewährleistet, dass auch sehr hochviskose Materialien mit einer ausreichend hohen Förderrate durch die Behandlungskammer hindurch gefördert werden können. Nebst dem, dass dadurch eine hohe Produktkapazität der Vorrichtung von bis zu 50'000 kg/h erreicht werden kann, kann gerade für temperatursensitive Materialien auch eine erhöhte Produktqualität erhalten werden, weil die Verweilzeit bzw. die Behandlungsdauer, während welcher das Material erhöhten Temperaturen und hohen Scherraten ausgesetzt wird, ausreichend tief gehalten werden kann.

Andererseits wird durch das Vorliegen der Verteilelemente eine sehr gute Verteilung und eine optimale Oberflächenerneuerung auf der Gehäusemantelinnenfläche (im Folgenden auch als "Behandlungsfläche" bezeichnet) auch dann gewährleistet, wenn das Material eine sehr hohe Viskosität aufweist.

Letztendlich kann somit erfindungsgemäß eine optimale Behandlung, insbesondere eine hohe Entgasungsrate, von sehr hochviskosem Material erzielt werden und gleichzeitig der Energieeintrag in das Material auf ein für das jeweilige Verfahren erforderliches Mass beschränkt werden, bei dem das Material keinen Schaden nimmt und insbesonders kein thermisch bedingter Abbau erfolgt.

Wie erwähnt ist denkbar, dass das Prozessgehäuse geringfügig zur Horizontalen geneigt ist. Damit kann erreicht werden, dass das Material eine zugelassene Rückströmung erfährt und somit länger im Prozessgehäuse verbleibt, was je nach Anwendung erwünscht sein kann.

Der Rotorwellenkörper der erfindungsgemässen Vorrichtung kann insbesondere einen Schaft umfassen und auf dessen Umfang verteilt angeordnete, axial verlaufende Befestigungsleisten, mittels welche die Streichelemente am Schaft befestigt werden können. Denkbar ist aber auch, dass der Rotorwellenkörper anstelle eines Schafts eine Hohlwelle umfasst, auf deren Umfang die Streichelemente verteilt angeordnet sind.

Das Prozessgehäuse weist wie erwähnt einen beheizbaren und/oder kühlbaren Gehäusemantel auf, welcher einen sich in axialer Richtung erstreckenden rotationssymmetrischen Gehäuseinnenraum umschliesst. Dieser den Materialbehandlungsraum der Vorrichtung bildende Gehäuseinnenraum ist in der Regel kreiszylindrisch ausgebildet, denkbar ist aber auch eine sich in Förderrichtung konisch verjüngende Ausgestaltung des Gehäuseinnenraums bzw. ein Gehäuseinnenraum, der in einem ersten Bereich kreiszylindrisch ausgebildet ist und in einem in Förderrichtung stromabwärts dazu gelegenen Bereich konisch verjüngend ausgebildet ist.

Der Materialbehandlungsraum lässt sich in vorzugsweisen Ausführungsformen nach den jeweiligen Zuständen, welche das zu behandelnde Material während der Bearbeitung durchläuft, bzw. den jeweiligen Bedingungen und Zielsetzungen der Behandlungsschritte, in unterschiedliche Zonen unterteilen, nämlich in eine Einlasszone (auch als "Einzugszone" bezeichnet), eine Prozesszone, eine Auslasszone (auch als "Austragszone" bezeichnet) und eine optionale Nachbearbeitungszone. Die Prozesszone lässt sich zudem in eine Distributionszone und eine Förderzone unterteilen, wobei in der Distributionszone eine gute Verteilung und Oberflächenerneuerung des Materials auf der Gehäusemantelinnenfläche im Vordergrund steht, wohingegen in der Förderzone primär eine gute Materialförderung erzielt werden soll. Einlasszone, Prozesszone (insbesondere enthaltend Distributionszone und Förderzone), Auslasszone und Nachbearbeitungszone sind in der Regel räumlich aufeinanderfolgend angeordnet. In diesem Fall ist die Nachbearbeitungszone außerhalb des Prozessgehäuses, aber mit diesem räumlich verbunden angeordnet. Denkbar ist aber auch, dass die Nachbearbeitungszone vor der Auslasszone und somit im Prozessgehäuse angeordnet ist.

Während etwa in einer auf das Lyocell-Verfahren ausgerichteten Vorrichtung in der Einlasszone die Verdampfung von Wasser aus der Cellulose-Suspension bei gleichzeitig guter Verteilung und raschem Abtransport des Materials im Vordergrund steht, soll in der Prozesszone die hauptsächliche thermische Behandlung durch eine gezielt eingestellte Kombination von Verteilung und Förderung erfolgen, wobei zusätzlich Wasser verdampft wird. Dabei wird in der Distributionszone primär angestrebt, dass mit zunehmender Wasserverdampfung die Suspension gut in Lösung übergeht. In der auf die Distributionszone folgenden Förderzone soll dem Material mit weitgehend gelöster Cellulose eine stärkere Förderkomponente in Richtung zur Auslasszone verliehen werden, wo das Material über einen entsprechenden Auslassstutzen ausgetragen und einer Nachbearbeitung in einer Nachbearbeitungszone unterzogen wird. In der Nachbearbeitungszone erfolgt die Homogenisierung der Lösung durch Scherung und Mischung unter zusätzlicher Verweilzeit. Während die Cellulose in der Regel in der Prozesszone nahezu vollständig in Lösung geht, ist auch denkbar, dass der Prozess so gefahren wird, dass die Cellulose erst in der Auslasszone bzw. der Nachbearbeitungszone vollständig in Lösung geht. Wie erwähnt ist denkbar, die Nachbearbeitungszone optional vor oder nach der Auslasszone anzuordnen.

Nebstdem, dass die erfindungsgemäße Vorrichtung für die Herstellung einer Cellulose-Lösung geeignet ist, sind aber auch andere Anwendungen denkbar, bei welchen ein viskoses Material bearbeitet wird. Unter "viskosem Material" wird dabei im Kontext der vorliegenden Erfindung ein Material verstanden, welches während der Behandlung in der erfindungsgemäßen Vorrichtung mindestens temporär eine Viskosität von 100 bis 15'000 Pas aufweist. Das viskose Material enthält vorzugsweise eine flüchtige Substanz, welche in der Dünnschichtbehandlungsvorrichtung abgezogen (verdampft oder sublimiert) werden kann.

Wie erwähnt ist die erfindungsgemäß erhaltene technische Wirkung bei einem sich über eine Länge von mindestens 3 m, vorzugsweise mindestens 8 m und besonders bevorzugt mindestens 10 m axial erstreckenden Materialbehandlungsraum besonders ausgeprägt. Somit erstreckt sich die Rotorwelle zwischen den Drehlagern im proximalen und im distalen Bereich vorzugsweise über eine Länge von mindestens 4 m, vorzugsweise 10 bis 15 m.

Wie weiter unten ausgeführt ist es besonders bevorzugt, je nach Zone unterschiedliche Konfigurationen der Rotorwelle bzw. der auf der Rotorwelle angeordneten Streichelementen vorzusehen, um den Zielsetzungen des in der jeweiligen Zone auszuführenden Behandlungsschritts Rechnung zu tragen.

In der Regel ist im Innern des Gehäusemantels ein Gehäusemantelhohlraum ausgebildet, welcher dazu bestimmt ist, zum Zwecke der Beheizung und/oder Kühlung von einem Wärmeträgermedium durchströmt zu werden. Typischerweise weist der Gehäusemantel eine Gehäusemantelinnenwand und eine Gehäusemantelaussenwand mit einem dazwischenliegenden Zwischenraum auf, in dem eine Leitspirale zur Leitung eines Wärmeträgermediums, typischerweise Wasserdampf oder Warmwasser, angeordnet ist. Wie weiter unten ausgeführt wird, ist insbesondere denkbar, zwei oder mehr Wärmeträgerkreisläufe vorzusehen, die voneinander getrennte Leitspiralen aufweisen und somit unabhängig voneinander temperierbar sind. Damit ist es möglich, die für die jeweilige Zone der Dünnschichtbehandlungsvorrichtung erwünschte Temperatur der Gehäusemantelinnenfläche unabhängig von den in den anderen Zonen vorliegenden Temperaturen einzustellen. Diesbezüglich ist weiter bevorzugt, in der Prozesszone Wasserdampf und in der Auslasszone Warmwasser als Wärmeträgermedium zu verwenden.

Gemäß einer bevorzugten Ausführungsform weist das Auftriebselement einen flächigen Anströmungsabschnitt mit einem in Rotationsrichtung vorlaufenden Ende auf, welches in grösserem Abstand von der Gehäusemantelinnenfläche angeordnet ist als ein dem vorlaufenden Ende nachlaufender Bereich des Anströmungsabschnitts. Dadurch wird zwischen dem Anströmungsabschnitt und der Gehäusemantelinnenfläche ein sich in Gegenrichtung zur Rotationsrichtung verengender Spalt ausgebildet. Gemäß einer besonders bevorzugten Ausführungsform erstreckt sich der Anströmungsabschnitt in einer Ebene, welche schräg zur Tangente bzw. Tangentialebene der Gehäusemantelinnenfläche ausgerichtet ist, wodurch zwischen dem Anströmungsabschnitt und der Gehäusemantelinnenfläche ein sich in Gegenrichtung zur Rotationsrichtung kontinuierlich verengender Spalt ausbildet wird. Weiter ist bevorzugt, dass der Winkel zwischen der Tangente bzw. Tangentialebene der Gehäusemantelinnenfläche und dem Anströmungsabschnitt im Bereich von 15° bis 30° liegt, insbesondere bei ca. 25°. Dabei wird unter Tangente der Gehäusemantelinnenfläche diejenige Tangente verstanden, die die im Schnitt kreisrunde Gehäusemantelinnenfläche an demjenigen Punkt berührt, die dem radial äußersten Ende des Anströmungsabschnitts am nächsten liegt. Vorzugsweise verengt sich der zwischen der Gehäusemantelinnenfläche und dem Anströmungsabschnitt ausgebildete Spalt um einen Faktor mehr als 10.

Bei der Rotation der Rotorwelle wird nun das zu bearbeitende Material, welches in der Regel eine hohe Viskosität aufweist, in den Spalt gedrückt, wodurch die am Anströmungsabschnitt angreifende Strömungskraft der Rotorwelle eine hydrodynamische Auftriebskomponente senkrecht zur Anströmungsrichtung verleiht. Diese Auftriebskomponente ist gerade bei relativ hochviskosem Material, insbesondere Material mit einer Viskosität höher als 100 Pas, relativ hoch. Somit wird einer Durchbiegung der Welle wirksam entgegengewirkt, wobei der Effekt bei der Bearbeitung von hochviskosem Material besonders ausgeprägt ist.

Um sicherzustellen, dass bereits beim Anfahren eine hydrodynamische Auftriebskomponente erhalten wird, kann bevorzugt sein, mindestens in der Phase des Anfahrens einen Teilstrom des zu behandelnden Materials in einem Bereich der Dünnschichtbehandlungsvorrichtung einzuführen, in welchem Auftriebselemente vorliegen, insbesondere in der Prozesszone. Zu diesem Zweck kann die Dünnschichtbehandlungsvorrichtung somit zusätzlich zum Einlassstutzen in der Einlasszone einen weiteren Einlassstutzen aufweisen, der stromabwärts zur Einlasszone und insbesondere in der Prozesszone angeordnet ist. Der Anteil dieses Teilstroms am insgesamt in die Vorrichtung eingeführten Material wird dabei derart gewählt, dass einerseits eine genügend hohe Auftriebskomponente erhalten wird, andererseits die Verweilzeit des Materials in der Dünnschichtbehandlungsvorrichtung immer noch ausreichend lange ist, um die gewünschte Behandlung zu gewährleisten. Vorzugsweise beträgt der Anteil des Teilstroms an dem in die Prozesszone eingeführten Material ca. 20% oder weniger, sodass der Anteil an dem in der Einlasszone eingeführten Material ca. 80% oder mehr beträgt.

Eine für die Zwecke der Erfindung besonders vorteilhafte Auftriebswirkung wird für einen Anströmungsabschnitt erhalten, welcher einen Winkelbereich von mindestens 10° des Umfangs des Rotorwellenkörpers abdeckt, insbesondere einen Winkelbereich von 10° bis 20°, und im Speziellen einen Winkelbereich von ca. 12°.

Gemäß einer besonders bevorzugten Ausführungsform wird mindestens ein Teil der Auftriebselemente von jeweils einem Streichelement gebildet. Diesem Streichelement kommt somit die doppelte Aufgabe zu, nebst der Funktion als Auftriebselement das zu behandelnde Material zu verteilen (im Falle eines als Verteilelement ausgebildeten Streichelements) oder dem Material zusätzlich eine Förderkomponente in Richtung zum Materialauslass hin zu verleihen (im Falle eines als Förderelement ausgebildeten Streichelements). Besonders bevorzugt fungiert das das Auftriebselement bildende Streichelement als Förderelement und als Verteilelement, liegt also als Förderverteilelement vor.

Besonders bevorzugt umfasst das Auftriebselement dabei ein wenigstens annähernd giebeldachförmiges Stegblech, dessen Dachfirst wenigstens annähernd parallel zur Achsrichtung der Rotorwelle verläuft. Durch die Winkelform wird das Stegblech somit in eine erste und zweite Stegblechfläche unterteilt, welche in zueinander schräg verlaufenden Ebenen liegen.

Die in Rotationsrichtung vorlaufende erste Stegblechfläche bildet dabei den Anströmungsabschnitt des Auftriebselements. Wie oben ausgeführt deckt diese erste Stegblechfläche einen Winkelbereich $\beta_1$ von mindestens 10°, insbesondere 10° bis 20°, des Umfangs des Rotorwellenkörpers ab. Die nachlaufende zweite Stegblechfläche deckt in der Regel einen Winkelbereich $\beta_2$ von mindestens 15° ab, insbesondere 15° bis 30°. Der vom gesamten Stegblech abgedeckte Winkelbereich $\beta$ liegt somit vorzugweise in einem Bereich von 25° bis 50°.

Der zwischen der ersten und der zweiten Stegblechfläche eingeschlossene Winkel liegt vorzugsweise in einem Bereich von 110° bis 150°. Das Längenverhältnis des den Anströmungsabschnitt bildenden Schenkels zu dem den nachlaufenden Abschnitt bildenden Schenkel liegt vorzugsweise in einem Bereich von 1:0,5 bis 1:0,8.

Je nachdem, ob das Streichelement nebst seiner Funktion als Auftriebselemente zudem primär als Förderelement oder als Verteilelement dienen soll, können auf der radialen Aussenseite des Stegblechs unterschiedlich verlaufende Rippen angeordnet sein. So weist das Auftriebselement für den Fall, dass es auch fördernd wirken soll, auf seiner Aussenfläche mindestens eine helikal verlaufende Förderrippe auf. Für den Fall, dass das Auftriebselement zudem als Verteilelement dienen soll, sind die Rippen förderneutral, insbesondere rechtwinklig zur Achsrichtung oder mit einem maximalen Förderwinkel von 5° ausgerichtet.

Durch die Winkelform des Stegblechs ergibt sich eine in der Regel axial verlaufende Scherkante. Unabhängig davon, ob das Auftriebselement als primäre weitere Funktion als Förderelement oder als Verteilelement dienen soll, findet aufgrund dieser Scherkante in jedem Fall eine Verteilung des Materials auf der Gehäusemantelinnenfläche statt. Liegen Förderrippen vor, so wird durch das Stegblech in der Regel sowohl eine Förderkomponente als auch eine Verteilkomponente verliehen, weshalb es in diesem Fall ein Förderverteilelement bildet. Die Scherkante ist dabei vorzugweise bündig mit den Förderrippen und somit von der Behandlungsfläche im gleichen Abstand angeordnet wie die radiale Aussenkante der Förderrippen. Alternativ dazu kann die Scherkante gegenüber der radialen Aussenkante der Förderrippe zurückversetzt und somit im Vergleich zu dieser von der Behandlungsfläche in einem grösseren Abstand angeordnet sein.

Gemäß einer bevorzugten Ausführungsform ist mindestens ein Teil der Auftriebselemente in einem Bereich angeordnet, welcher mittig zwischen den Drehlagern liegt, auf welchen die Rotorwelle gelagert ist. Dieser Bereich liegt gemäss einer spezifischen Ausführungsform in der Prozesszone der Vorrichtung. Die durch die Auftriebselemente verliehene Auftriebskomponente setzt somit in jenem Bereich bzw. jener Zone an, in welchem/welcher die Durchbiegung der Rotorwelle am stärksten ist.

Bezüglich dieser Ausführungsform ist weiter bevorzugt, dass mindestens ein Teil der Auftriebselemente in der Prozesszone helikal versetzt zueinander auf dem Rotorwellenkörper angeordnet sind. Dadurch kann eine optimale Verteilung der Auftriebskraft bzw. der durch die einzelnen Auftriebselemente verliehenen Auftriebskomponenten über einen beliebig langen Abschnitt der Prozesszone erhalten werden.

Des Weiteren ist gerade in der Prozesszone bevorzugt, dass ein Teil der Auftriebselemente jeweils ein Förderverteilelement bilden. Konkret ist dabei auf der radialen Aussenseite des jeweiligen Auftriebselements, insbesondere des Stegblechs, mindestens eine helikal verlaufende Förderrippe angeordnet.

In der Regel schliesst die radiale Aussenkante der Förderrippe bezogen zur Achsrichtung einen Winkel grösser als 45° ein. Somit ist auch bei sehr hochviskosem Material die durch das Auftriebselement verliehene Förderkomponente ausreichend hoch, um eine gewünschte Förderrate durch den Materialbehandlungsraum hindurch zu erhalten. Vorzugsweise schliesst die radiale Aussenkante der Förderrippe bezogen zur Achsrichtung einen Winkel von höchstens 65° ein. Im Speziellen liegt der Winkel in einem Bereich von 50° bis 60°.

Nebstdem, dass die Förderwirkung eines Förderelementes durch den Anstellwinkel der radialen Aussenkante einer Förderrippe bestimmt wird, kann die Förderwirkung des Auftriebselementes zusätzlich über die Anzahl der Förderrippen bzw. den Abstand zwischen den in Achsrichtung aufeinanderfolgenden Förderrippen eingestellt werden.

Gemäß einer weiteren bevorzugten Ausführungsform ist in der Einlasszone ein zwischen der Gehäusemantelinnenfläche und dem Rotorwellenkörper angeordneter, den Rotorwellenkörper mindestens annähernd vollständig umgebender konzentrischer Schutzmantel ausgebildet. Durch diesen Schutzmantel wird gewährleistet, dass in der Einlasszone, also noch vor dem während der Behandlung eintretenden Viskositätsanstieg, das Material nicht auf den Rotorwellenkörper tropfen oder spritzen kann.

Somit wird gemäß dieser bevorzugten Ausführungsform das zu behandelnde Material und die bei der Behandlung entweichenden gasförmigen Materialkomponenten im Gleichstrom geführt, wobei weiter bevorzugt ist, dass in der an die Einlasszone anschliessenden Prozesszone das Material und die gasförmigen Materialkomponenten im Gegenstrom geführt werden. Damit wird in der Einlasszone der tieferen Viskosität des Materials und der Gefahr eines möglichen "Materialmitrisses" durch die verdampfenden Komponenten apparativ Rechnung getragen, während in der nachfolgenden Prozesszone eine optimale Entgasung erzielt wird, da ein Kontakt zwischen dem zu behandelnden Material und einem Grossteil der Brüden minimiert wird.

Gemäß einer besonders bevorzugten Variante der oben beschriebenen Ausführungsform wird der Schutzmantel mindestens teilweise durch mehrere in Umfangsrichtung verteilte Auftriebselemente, insbesondere Stegbleche, gebildet. Somit wird auch in der Einlasszone die erfindungsgemäß angestrebte Auftriebskomponente erhalten.

Auch die in der Einlasszone angeordneten Stegbleche weisen vorzugsweise auf ihrer radialen Aussenseite mindestens eine helikal verlaufende Förderrippe auf, um insbesondere in diesem Bereich eine hohe Förderrate zu erzielen und damit einem Aufstauen von Material entgegenzuwirken.

Dabei ist weiter bevorzugt, dass zwischen jeweils zwei in Umfangsrichtung aufeinanderfolgenden Auftriebselementen, insbesondere Stegblechen, ein radial zurückversetzter Kanal ausgebildet ist. Die bei der Bearbeitung des Material austretenden Brüden können somit durch diesen Kanal geführt werden und, nachdem das Ende des Schutzmantels erreicht wurde, durch den vom Schutzmantel umgebenen Innenraum zu einem von der Behandlungskammer abgetrennten Raum gelangen, von wo aus sie über einen Brüdenabzug abgeführt werden können.

Gemäß einer weiteren bevorzugten Ausführungsform kann auch in der Prozesszone und/oder in der Auslasszone ein zwischen der Gehäusemantelinnenfläche und dem Rotorwellenkörper angeordneter, den Rotorwellenkörper mindestens annähernd vollständig umgebender konzentrischer Schutzmantel ausgebildet sein, insbesondere ein Schutzmantel, welcher mindestens teilweise durch mehrere in Umfangsrichtung verteilte Auftriebselemente gebildet wird. Durch das Vorliegen eines Schutzmantels wird auch in diesen Zonen verhindert, dass Material auf den Rotorwellenkörper tropfen kann und durch ein "Einfrieren" auf dem unbeheizten Rotorwellenkörper auf diesem verbleibt. Diese Ausführungsform ist insbesondere dann von Vorteil, wenn das zu behandelnde Material auch in der Prozesszone oder der Auslasszone über keine ausreichend hohe Viskosität verfügt, dass ein Herunterfliessen oder Heruntertropfen vollständig verhindert werden kann. Dies ist insbesondere während des An- oder Abfahrens oder aber bei Betriebsstörungen der Vorrichtung von Relevanz. Weiter kann bevorzugt sein, die Rotorwelle beheizbar auszugestalten, um ein Einfrieren von Material, das auf den Rotorwellenkörper getropft ist, zu verhindern. Mit anderen Worten liegen bei dieser bevorzugten Ausführungsform somit Mittel zur Beheizung der Rotorwelle, insbesondere des Rotorwellenkörpers, vor.

Nebst den genannten Auftriebselementen, welche vorzugsweise auch die Funktion eines Förderelements, eines Verteilelements oder eines Förderverteilelements aufweisen, weist die Rotorwelle gemäss einer weiteren bevorzugten Ausführungsform weitere Streichelemente auf, die radial abragende Zähne umfassen, welche in der Regel jeweils an einem von mehreren auf der Hohlwelle angeordneten, axial verlaufenden Flanschen fixiert sind. Solche Streichelemente verleihen der Rotorwelle in der Regel keine oder nur eine vernachlässigbare Auftriebskomponente.

Je nach Ausrichtung der Scherkante der Zähne bezogen zur Achsrichtung wird durch das entsprechende Streichelement ein Verteilelement oder ein Förderelement gebildet, wie in Analogie bereits im Zusammenhang mit den Auftriebselementen beschrieben wurde. So bildet ein Streichelement, deren Zähne eine Scherkante aufweisen, die bezogen zur Achsrichtung einen Winkel kleiner als 15°, insbesondere kleiner als 5°, einschliessen, ein Verteilelement, während bei einem zwischen Scherkante und Achsrichtung vorliegenden Winkel von gleich oder grösser 15°, insbesondere gleich oder grösser 45° das Streichelement ein Förderelement bildet.

Gemäß einer spezifischen Ausführungsform liegen als Förderelemente fungierende Streichelemente vor, bei welchen besagter Winkel im Bereich von 15° bis 30° liegt und im Speziellen bei ca. 20°. Denkbar ist etwa, dass die Zähne ein radial innenliegendes Teilstück aufweisen, welches in einer parallel zur Achsrichtung verlaufenden Ebene liegt und über welches die Zähne angeflanscht werden, und ein radial aussenliegendes Teilstück, das in einer schräg zur Achsrichtung verlaufenden Ebene liegt und dessen radial äusseres Ende die Scherkante bildet.

Je nach Anwendung kann alternativ zu dieser Ausführungsform bevorzugt sein, dass die Scherkante mindestens eines Teils der Streichelemente einen geringeren als den oben genannten Winkel einschliesst und insbesondere mindestens annähernd parallel zur Achsrichtung verläuft, d.h. bezogen zu dieser einen Winkel von ca. 0° einschliesst. Im letztgenannten Fall sind diese als Verteilelemente fungierenden Streichelemente vollkommen förderneutral und haben ausschliesslich verteilende Funktion. Welche konkrete Konfiguration der Streichelemente gewählt wird, hängt letztendlich vom zu behandelnden Material ab und kann variieren.

Wie erwähnt hängt die Verteilung zwischen Verteilelementen und Förderelementen stark von der Zweckbestimmung der Vorrichtung und der jeweiligen Zone ab. So ist gemäss einer bevorzugten Ausführungsform etwa das Verhältnis der Anzahl Förderelemente zur Anzahl Verteilelemente in der Förderzone höher als in der Distributionszone, da in der Förderzone der Förderung des Materials eine erhöhte Bedeutung zukommt.

Gemäß einer weiteren bevorzugten Ausführungsform sind in Umfangsrichtung des Rotors die Verteilelemente mit den Förderelementen alternierend angeordnet, da dadurch eine sehr homogene Verteilung des Materials auf der Behandlungsfläche gewährleistet werden kann.

In der an die Prozesszone anschliessenden Auslasszone wird dann das Material über den Auslassstutzen aus dem Behandlungsraum ausgetragen, wobei eine Konfiguration der Rotorwelle eingesetzt werden kann, welche die Gehäuseinnenwand abreinigt und das Produkt in ein nach unten abzweigendes Förderorgan streicht. Denkbar ist etwa, dass das Förderorgan in Form eines vertikal angeordneten Konus vorliegt, in welchem das Material eine ausreichende Zulaufhöhe erhält, um durch eine Schnecke oder bevorzugter eine Zahnradpumpe ausgetragen zu werden. Weiter ist denkbar, dass im distalen Endbereich, also unmittelbar vor dem Enddeckel des Prozessgehäuses eine Wendel auf der Rotorwelle aufgebracht ist, das Material, das nicht vom Auslassstutzen und dem diesem nachgelagerten Austragssystem erfasst wurde, wieder vom distalen Ende weg hin zum Auslassstutzen fördert.

Denkbar und je nach Anwendung bevorzugt ist zudem, für den Austrag ein separates Austragssystem vorzusehen. Insbesondere denkbar ist dabei, dass der Auslassstutzen in ein Austragssystem in Form einer Austragsmonoschnecke oder einer Austragsdoppelschnecke mündet, vorzugweise mit Achsrichtung quer zur Achsrichtung des Prozessgehäuses. Zweck dieses Austragssystem ist es, das behandelte Material bzw. das Produkt einer Pumpe zuzuführen, welche den Druck für eine nachgeschaltete Bearbeitung aufbaut, im Falle einer Lyocell-Lösung insbesondere für die nachgeschalteten Filter und Spinndüsen. Hierzu können auch zusätzliche Booster-Pumpen eingesetzt werden.

Im Falle eines Austragssystems in Form einer Austragsdoppelschnecke kann zudem bevorzugt sein, diese mit Knet- und/oder Dispergierblöcken zu bestücken, wodurch eine hohe Scherung erzielt wird, was letztendlich in einer zusätzlichen Homogenisierung und im Falle des Lyocell-Verfahrens zu einer Lösung von kleinsten Partikeln in der Materialmasse resultiert.

Das Austragssystem kann entweder eine horizontal oder eine vertikal verlaufende Förderrichtung aufweisen. In der Regel ist dem Austragssystem in seinem auslassseitigen Bereich eine Austragspumpe zugeordnet, über die das auszutragende Material abgeführt bzw. weiteren Vorrichtungen, wie z.B. einem Filter und/oder einer Spinndüse, zugeführt werden kann.

Insbesondere denkbar ist, dass das Austragssystem über eine vertikal verlaufende Förderrichtung verfügt und einen Trichter mit einer darin angeordneten und sich koaxial erstreckenden Austragswelle umfasst, welche mindestens bereichsweise eine Austragsmonoschnecke aufweist. Diese Ausführungsform weist den Vorteil auf, dass die Drehzahl der im Prozessgehäuse vorliegenden Rotorwelle von derjenigen der Austragswelle im Austragssystem entkoppelt werden kann.

Alternativ dazu ist auch denkbar, ein Austragssystem vorzusehen, welches einen Trichter umfasst, dessen Achse mit der Achse der Rotorwelle zusammenfällt. Insbesondere denkbar ist dabei, dass die Rotorwelle in den Trichter hineinragt und in einem in Förderrichtung an einen konischen Trichterabschnitt anschliessenden zylindrischen Trichterabschnitt eine Austragsmonoschnecke aufweist.

Gemäß einer weiteren bevorzugten Ausführungsform weist die Dünnschichtbehandlungsvorrichtung zudem eine Reinigungsvorrichtung auf, welche derart ausgestaltet ist, dass sie bei geöffnetem Enddeckel in das Prozessgehäuse einführbar und in Achsrichtung hin und her bewegbar ist. Denkbar ist etwa, dass die Reinigungsvorrichtung hierfür entsprechend positionierte Bürsten oder Hochdruckwasserdüsen aufweist. Gerade für die oben beschriebene Ausführungsform, in welcher in der Einlasszone zwischen zwei in Umfangsrichtung aufeinanderfolgende Stegbleche ein längs verlaufender Brüdenkanal ausgebildet ist, kann somit eine rasche und einfache Reinigung der Dünnschichtbehandlungsvorrichtung gewährleistet werden. Insbesondere kann eine aufwändige Demontage der Vorrichtung umgangen werden, um die zu reinigenden Stellen mit der Reinigungsvorrichtung zu erreichen.

Weiter ist denkbar, unmittelbar benachbart zur distalen, d.h. vorderen Stirnseite des Prozessgehäuses ein scheibenförmiges Abreinigungselement am Rotorwellenkörper anzuordnen, welches verhindert, dass sich an der Innenfläche der distalen Stirnseite Material ablagern kann und welche ferner auch das distale Drehlager vor Verunreinigung durch das Material schützt.

Wie erwähnt ist die erfindungsgemässe Vorrichtung insbesondere zur thermischen Auftrennung eines Stoffgemischs ausgelegt, und liegt im Speziellen in Form eines Dünnschichtverdampfers, eines Dünnschichttrockners oder eines Dünnschichtreaktors vor, vorzugsweise in Form eines Dünnschichtverdampfers.

Die Vorrichtung erlaubt es, Materialien mit einer Viskosität von bis zu 15'000 Pa·s optimal zu behandeln, insbesondere zu entgasen und in manchen Fällen auch zu reagieren, sei es in Kombination mit der Entgasung oder unabhängig davon.

Typischerweise liegt die Viskosität des mit der erfindungsgemässen Vorrichtung zu behandelnden Materials im Bereich von 100 bis 5'000 Pa·s, insbesondere von 300 bis 3'000 Pa·s und im Speziellen von 500 bis 1'000 Pa·s. Die Viskositätswerte beziehen sich dabei auf die Betriebstemperatur und ein Schergefälle von $D=10 \text{ sec}^{-1}$.

Des Weiteren ist die Vorrichtung gerade zur Behandlung von relativ temperaturempfindlichen Materialien besonders gut geeignet, weil die Wärmeenergie, der das Material ausgesetzt wird, durch die relativ tief wählbare Temperatur und Verweilzeit auf der Behandlungsfläche, optimal eingestellt werden kann.

Wie erwähnt eignet sich die erfindungsgemässe Dünnschichtbehandlungsvorrichtung insbesondere für die Herstellung einer Cellulose-Lösung, im Speziellen einer Cellulose-Lösung für die Herstellung von Lyocell-Fasern.

Konkret liegt die Betriebstemperatur der erfindungsgemässen Dünnschichtbehandlungsvorrichtung im Allgemeinen in einem Bereich von 80 bis 120°C, insbesondere von 90 bis 115°C und im Speziellen von 100 bis 110°C.

Um die Celluloselösung bestmöglich in eine homogene Lösung überzuführen hat sich gezeigt, dass die Herstellung (z.B. wie unten beschrieben) unter Vakuum (Druck p, in mbar) in etwa gemäß der angegebenen Formel ( $p = 122.e^{-(0,05\ c(Cell))}$ ) ideal durchgeführt werden kann. Die Cellulosekonzentration ("c(Cell)", in Masse-%) hierin ist vorzugsweise von 6 % - 20%, insbesondere von 10 % - 15%. In diesen Konzentrationsbereichen war ein effizientes, rasches und im Wesentlichen vollständiges Auflösen der Cellulose möglich.

Die Umfangsgeschwindigkeit der Rotorwelle der erfindungsgemässen Dünnschichtbehandlungsvorrichtung liegt im Allgemeinen in einem Bereich von 6 bis 12 m/s, insbesondere von 8 bis 10 m/s.

In einem weiteren Aspekt betrifft die vorliegende Erfindung ein Verfahren zur Herstellung einer Lösung von Cellulose mit einem Lösungsmittel aus einer Suspension von Cellulose in dem Lösungsmittel und einem flüchtigen Nicht-Lösungsmittel umfassend das Einbringen der Suspension in einen Einlass einer Dünnschichtbehandlungsvorrichtung, filmartiges Aufbringen und Verteilen der Suspension an einem mit einem Wärmetauscher temperierten Gehäusemantel durch um eine gemeinsame Achse rotierende Streichelemente in einem Prozessgehäuse der Dünnschichtbehandlungsvorrichtung, Verdampfen von flüchtigem Nicht-Lösungsmittel, sodass die Cellulose gelöst wird, und Ausbringen der Lösung von Cellulose aus der Dünnschichtbehandlungsvorrichtung durch einen Auslass, wobei zumindest ein Teil der Streichelemente einen Vortrieb der Cellulose in Richtung des Auslasses bewirken. Insbesondere bevorzugt wird der Vortrieb so eingestellt, sodass der Austrag am Auslass mindestens 300 kg/h, speziell bevorzugt mindestens 350 kg/h, Cellulose-Lösung pro m² der Oberfläche des (mit einem Wärmetauscher) temperierten Gehäusemantels (Innenwand) ist.

Die erfindungsgemäßen Streichelemente, insbesondere mit Förderelementen, erlauben einen raschen Vortrieb der Cellulose-Suspension respektive der entstehenden Lösung in einem Lyocell-Verfahren. Dies ermöglicht eine rasche Behandlung, Auflösung und Austrag der Cellulose bzw. Cellulose-Lösung. Beispielweise wurde gemäß der Erfindung und in den Beispielen (siehe Tabelle Zeile ac) gezeigt, dass eine Menge von 145,8 kg/h und pro m$^2$ bis 887,5 kg/h und pro m$^2$ produziert werden kann - bei einer Dünnschichtbehandlungsvorrichtung im Labormaßstab mit einer Oberfläche des mit einem Wärmetauscher temperierten Gehäusemantels (auch 'Wärmetauscherfläche') von 0,55 m$^2$. Dies sind wesentlich größere Mengen als beispielsweise in der EP 0356419 A2 beschrieben (72 kg/h bei einer Vorrichtung ähnlicher Größe). Um eine wirtschaftlich sinnvolle Größe des Löseapparates in Abhängigkeit der Menge an Celluloselösung am Austrag zu erzielen, hat sich gezeigt, dass eine Menge von mehr als 300 kg/h Cellulose-Lösung pro m$^2$ temperierter Oberfläche vorteilhaft ist. Ab einer Menge von ca. 600 kg/h und pro m$^2$ hat sich aus den Versuchen ergeben, dass die Lösungsqualität (Homogenität) geringer wird.

Somit konnte gezeigt werden, dass durch Einstellen der Streichelemente für eine rasche Produktförderung - wie es bei einer horizontalen Ausrichtung aufgrund des Ausbleibens einer Schwerkraft-bedingten Förderkomponente notwendig ist - ein effizientes Auflöseverfahren für Cellulose ermöglicht wurde. Überraschenderweise wurde bei der vorwärtsgetriebenen Behandlung im Prozessgehäuse auch ein höchst effizienter Lösungsprozess bewerkstelligt, der im Rahmen des Lyocell-Verfahrens Cellulose von einer heterogenen Suspension rasch und vollständig in eine homogene Cellulose-Lösung überführen konnte. Die Qualität der erhaltenen Cellulose-Lösung erfüllt die Voraussetzungen für einen Formgebungsprozess im Lyocell-Verfahren, wie Spinnen zu Filamenten. Im Grunde sind diese Vorteile unabhängig von der horizontalen Aufstellung. Obwohl die erfindungsgemäße Vorrichtung für eine horizontale Lagerung entwickelt wurde, so sind die Vorteile in der Anwendung auch in einer vertikalen Ausrichtung gegeben, insbesondere wenn hochviskose Suspensionen oder Lösungen verarbeitet werden. Daher ist dieser Aspekt der Erfindung unabhängig von der Ausrichtung des Prozessgehäuses, obwohl auch hier natürlich die horizontale Ausrichtung bevorzugt ist.

Vorzugsweise ist der Vortrieb durch die Streichelemente in Richtung des Auslasses, so dass der Austrag am Auslass 300 - 600 kg/h, vorzugsweise 350 kg/h - 550 , speziell bevorzugt zwischen 5380 und 480 kg/h, Cellulose-Lösung (im Prozessgehäuse fertig behandeltes Material) pro m$^2$ der Oberfläche des mit einem Wärmetauscher temperierten Gehäusemantels ist.

Der Vortrieb kann z.B. über die Anzahl der für den Vortrieb maßgeblichen Streichelemente (Förderelemente, wie oben beschrieben), deren Winkel und die Rotationsgeschwindigkeit der Förderelemente eingestellt werden. Vorzugsweise ist der von der Scherkante eines Förderelements bezogen zur Achsrichtung jeweils eingeschlossene Winkel mehr als 15°, vorzugsweise 15° bis 30°, spezielle bevorzugt etwa 20°. Vorzugsweise ist mindestens ein Drittel der Streichelemente ein Förderelement.

Weiters ist die erfindungsgemäße Einteilung in unterschiedliche Behandlungszonen (Einlasszone, Prozesszone und Auslasszone) besonders vorteilhaft und wirkt sich positiv auf die Qualität der erhaltenen Celluloselösung, die beim erfindungsgemäßen Vortrieb rasch vorwärts bewegt wird, aus.

Vorzugsweise ist in der Einlasszone die Temperatur des Materials, insbesondere der Suspension, mindestens 10°C geringer als in der Prozesszone. Vorzugsweise werden in der Einlasszone die zuvor genannten giebeldachförmigen Stegbleche vorgesehen. Dadurch kann eine Klumpenbildung beim Einlass der Suspension in die Vorrichtung effektiv vermieden und ein effizienter Transport des Materials und ein Brüdenstrom im Gleichstrom gewährleistet werden. In der Einlasszone wird eine möglichst gleichmäßige Schicht an Suspension über die Gehäusemantelinnenfläche aufgebracht.

Die zuvor und im Folgenden genannten Förderelemente und Verteilelemente werden insbesondere in der Prozesszone vorgesehen. Hierbei ist vorzugsweise das Verhältnis der Förderelemente zu Verteilelemente zwischen 2:1 und 1:2, wobei Streichelemente mit beiden Funktionen (Förderverteilelemente) beiden Gruppen zugeordnet werden. Vorzugsweise ist auch oder alternativ das Verhältnis der Längen der äußeren Scherkanten, also der radial äußeren Enden der Elemente, welche in Kontakt mit der Suspension sind, auf einander abgestimmt. Vorzugsweise ist das Verhältnis der Summe der Längen der äußeren Scherkanten der Förderelemente zu der Summe der Längen der äußeren Scherkanten der Verteilelemente zwischen 2:1 und 1:2.

Vorzugsweise werden in der Auslasszone keine oder nur wenige Förderelemente vorgesehen, also fast ausschließlich Verteilelemente. Vorzugsweise sind maximal 10% der Streichelemente in der Auslasszone Förderelemente und/oder mindestens 90% der Streichelemente sind Verteilelemente ohne Förderfunktion. Diese Anteile lassen sich auch wie oben auf die Summe der Längen der äußeren Scherkanten der Streichelemente auslegen. D.h. vorzugsweise sind maximal 10% der Summe der Längen der äußeren Scherkanten der Streichelemente Förderelementen zugeordnet bzw. und/oder sind mindestens 90% der Summe der Längen der äußeren Scherkanten der Streichelemente Verteilelementen zugeordnet.

Vorzugsweise sind die Längenverhältnisse der Zonen im Bereich von 5%-25% Einlasszone, 50%-90% Prozesszone, der Rest 5%-25% Auslasszone.

Alternativ zu obiger Ausführungsform, gemäss welcher in der Auslasszone keine oder nur wenige Förderelemente vorgesehen sind, kann es aber insbesondere in jenen Fällen, in denen das Austragssystem eine horizontal verlaufende Förderrichtung aufweist, bevorzugt sein, Streichelemente vorzusehen, die eine Förderkomponente auf das Material ausüben. Insbesondere kann bevorzugt sein, dass im distalen Endbereich der Auslasszone bzw. im Austragssystem Stegbleche gemäss obiger Beschreibung auf dem Rotorwellenkörper angeordnet sind, welche einerseits als Auftriebselement andererseits aber auch als Förderverteilelemente fungieren. Damit wird dem Umstand Rechnung getragen, dass die Schwerkraftskomponente bei horizontal ausgerichteten Austragssystem nicht zum Tragen kommt. Durch das Vorliegen von Förderverteilelementen in den genannten Abschnitten wird ein effizientes Austragen des Materials aber auch für diese horizontalen Austragssysteme gewährleistet und zwar selbst dann, wenn das auszutragende Material über eine relativ hohe Viskosität verfügt.

Auch für diese Ausführungsform ist besonders bevorzugt, dass die Stegbleche in dem dem distalen Endbereich der Auslasszone entsprechenden Längsabschnitt der Rotorwelle helikal versetzt zueinander auf dem Rotorwellenkörper angeordnet sind.

Die Produktmenge am Auslass wird durch die zugeführte Suspensionsmenge bedingt, ist allerdings aufgrund der Verdampfung von Nicht-Lösungsmittel im Prozessgehäuse etwas geringer. Das verdampfte Nicht-Lösungsmittel wird vorzugsweise nicht am Auslass der Cellulose-Lösung (hochviskose flüssige Masse) ausgetragen, sondern vorzugsweise in der Dampfphase im Gegenstrom zum Fluss der Cellulose-Suspension geführt und daher in Einlassnähe abgeführt.

Der Gehäusemantel (Innenwand) wird vorzugsweise mit einem Wärmetauscher temperiert. Durch den Wärmetauscher kann die Wärme eines heißen Fluids, welches im Lyocell-Verfahren anfällt, kostengünstig zum Heizen der Vorrichtung benutzt werden. Vorzugsweise wird der Wärmetauscher bzw. die Innenwand des Gehäusemantels (Prozessgehäuse) auf eine Temperatur von 90°C bis 130 °C beheizt. Insbesondere wird zumindest die Prozesszone direkt temperiert. Abwärme von der Prozesszone kann zum Heizen der Einlass- und Auslasszonen benutzt werden, welche somit indirekt durch den Wärmetauscher temperiert werden. Wärmeträgermedien im Wärmetauscher können Wasser, Öl, Dampf sein. Alternativ kann auch über elektrische Beheizung temperiert werden.

Die Länge des mit einem Wärmetauscher temperierten Gehäusemantels vom Einlass bis zum Auslass beträgt vorzugsweise 0,5 m oder mehr, vorzugsweise 1 m bis 20 m, z.B. 4 m bis 18 m oder 6 m bis 17 m oder 8 m bis 16 m, vorzugsweise 10 bis 15 m. Eine höhere Länge ermöglicht bei gleichbleibender Behandlungszeit der Suspension einen rascheren Vortrieb bzw. einen höheren Durchsatz an Material und damit Produktionsmengen.

Ein wesentliches Kriterium für das mögliche zu behandelnde Volumen im Prozessgehäuse ist die zur Behandlung der Suspension eingesetzte Oberfläche darin, also die Oberfläche unter Einfluss des Wärmetauschers, der durch Erhitzen das Verdampfen des Nicht-Lösungsmittels bewirkt. Vorzugsweise ist die Oberfläche des mit einem Wärmetauscher temperierten Gehäusemantels 0,5 $m^2$ bis 150 $m^2$, z.B. 1 $m^2$ bis 140 $m^2$, 2 $m^2$ bis 130 $m^2$, 5 $m^2$ bis 120 $m^2$, 10 $m^2$ bis 100 $m^2$, 15 $m^2$ bis 80 $m^2$, vorzugsweise 60 $m^2$ bis 125 $m^2$. Durch die erfindungsgemäße horizontale Lagerung sind bauliche Gründe für Größenlimits bei vertikalen Dünnschichtbehandlungsvorrichtungen (wie die Gebäudehöhe) nicht mehr relevant, da in der horizontalen Ebene eine einfache Handhabung der Dünnschichtbehandlungsvorrichtung ermöglicht wird.

Das Volumen und die dazu entsprechende spezifische Belastung der einzelnen Behandlungszonen in einer erfindungsgemäßen Ausführungsform stellen sich folgend dar:

| Zone | Volumen in der Dünnschichtbehandlungsvorrichtung in dm$^3$ | Spezifische Belastung in kg/h/dm$^3$ |
| --- | --- | --- |
| Einlasszone | 1,3 - 1,5 | 76 - 378 |
| Prozess zone | 1,5 - 1,9 | 66 - 262 |
| Auslasszone | 3 - 4 | 2 - 125 |

Es hat sich gezeigt, dass eine ideale homogene Celluloselösung durch einen bestimmten Suspensionseintrag in einer getesteten Dünnschichtbehandlungsvorrichtung erreicht wurde. Als allgemeine vergleichbare Kennzahl ist die eingebrachte Suspension oder Lösung (in kg/h) dividiert durch das vorhandene Volumen (in dm$^3$) zweckmäßig. Es ergibt sich daraus die sogenannte "spezifische Belastung". Diese spezifische Belastung ist definiert durch den eingebrachten Massenstrom dividiert durch das vorhandene Volumen in den einzelnen Zonen, also spezifische Belastung = Massenstrom / Volumen der Zone.

Das Verfahren zeigt die besten Lösungsqualitäten bei einer spezifische Belastung in der Einlasszone von 76 - 378 kg/h/dm$^3$, in der Prozesszone von 66 - 262 kg/h/dm$^3$, in der Auslasszone von 2 - 125 kg/h/dm$^3$ und in der Nachbearbeitungszone von 0 - 500 kg/h/dm$^3$.In bevorzugten Ausführungsformen ist die mittlere Behandlungszeit (Zeit von Einlass bis Auslass) der Cellulose im Prozessgehäuse mindestens 20 s, vorzugsweise 30 s bis 1000 s. Die Behandlungszeit wird durch die Vortriebsgeschwindigkeit und die Länge des Prozessgehäuses, insbesondere der mit einem Wärmetauscher bestückte Teil davon, beeinflusst. Beispielsweise ist die Behandlungszeit 60 s bis 900 s oder 70 s bis 800 s oder 80 s bis 700 s oder 90 s bis 600 s oder 100 s bis 500 s oder 1100 s bis 400 s oder 120 s bis 350 s oder 130 s bis 300 s. Vorzugsweise ist die Behandlungszeit maximal 350 s, insbesondere bevorzugt maximal 300 s.

Vorzugsweise werden die Streichelemente mit einer Drehzahl von mindestens 50 Umdrehungen pro Minute rotiert. Da die Streichelemente durch die Rotation des Rotorwellenkörpers um die gemeinsame Achse rotieren, entspricht die Drehzahl auch der Rotationsgeschwindigkeit des Rotorwellenkörpers. Die Drehzahl der Streichelemente ist vorzugsweise mindestens 50 Umdrehungen pro Minute, bevorzugter mindestens 100 Umdrehungen pro Minute, bevorzugter mindestens 200 Umdrehungen pro Minute, bevorzugter mindestens 300 Umdrehungen pro Minute, bevorzugter mindestens 350 Umdrehungen pro Minute, bevorzugter mindestens 400 Umdrehungen pro Minute, bevorzugter mindestens 450 Umdrehungen pro Minute, bevorzugter mindestens 500 Umdrehungen pro Minute oder mindestens 550 Umdrehungen pro Minute oder jeder Bereich innerhalb dieser Werte oder darüber, vorzugsweise 50 bis 800 Umdrehungen pro Minute.

Vorzugsweise wird das radial äußerste Ende der Streichelemente mit einer Geschwindigkeit von 1,5 m/s bis 12,5 m/s bewegt. Die Bewegung erfolgt durch die Rotation der Streichelemente. Das radial äußerste Ende der Streichelemente ist in Kontakt mit der Suspension und bearbeitet diese.

Vorzugsweise werden die (einzelnen oder mehreren) Streichelemente in Folge über einen Abschnitt mit einem Wärmetauscher temperierten Gehäusemantel mit einer Frequenz von 1500 bis 4000 pro min bewegt. Dieser Parameter wird auch Blattfolgefrequenz bezeichnet und gibt an, wie viele Streichelemente pro min über einen Abschnitt streifen. Er wird durch die Anzahl der radial angeordneten Streichelemente und der Rotationsgeschwindigkeit bestimmt. Unterschiedliche Zonen können unterschiedliche Anzahlen an radial angeordneten Streichelementen aufweisen. Da Streichelemente am Rotor versetzt angeordnet sein können und hierbei in Rotationsrichtung Überlappungen der Versetzungen entstehen können, können auch manche Abschnitte (auch innerhalb ein und derselben Zone) einer höheren Blattfolgefrequenz unterliegen. Die angegebene Frequenz von 1500 bis 4000 pro min wird vorzugsweise in Bereichen ohne Überlappungen durch Versetzungen, sowie in der Prozesszone erreicht. Vorzugsweise ist die Frequenz 1800 bis 3000 pro min. Vorzugsweise folgen unmittelbar nachfolgende Streichelemente mit einem Abstand von 100 mm bis 300 mm zwischen den radial äußersten Enden der Streichelemente aufeinander. Dieser Abstand wird auch Blattspitzenabstand bezeichnet. Vorzugsweise wird auch dieser Abstand bei Bereichen ohne Überlappungen durch Versetzungen gewählt und/oder in der Prozesszone eingestellt. Vorzugsweise ist der Blattspitzenabstand 150 mm bis 280 mm oder 180 mm bis 260 mm oder 190 mm bis 250 mm oder 200 mm bis 240 mm.

Die Schergeschwindigkeit der filmartig aufgebrachten und verteilten Suspension durch die Einwirkung der Streichelemente ist vorzugsweise $3000 \text{ s}^{-1}$ bis $30000 \text{ s}^{-1}$, insbesondere bevorzugt $4000 \text{ s}^{-1}$ bis $28000 \text{ s}^{-1}$, $5000 \text{ s}^{-1}$ bis $26000 \text{ s}^{-1}$, $6000 \text{ s}^{-1}$ bis $24000 \text{ s}^{-1}$, $7000 \text{ s}^{-1}$ bis $22000 \text{ s}^{-1}$, $8000 \text{ s}^{-1}$ bis $20000 \text{ s}^{-1}$ oder $10000 \text{ s}^{-1}$ bis $30000 \text{ s}^{-1}$, $11000 \text{ s}^{-1}$ bis $28500 \text{ s}^{-1}$, $12000 \text{ s}^{-1}$ bis $27000 \text{ s}^{-1}$, $12000 \text{ s}^{-1}$ bis $25500 \text{ s}^{-1}$, $13000 \text{ s}^{-1}$ bis $24000 \text{ s}^{-1}$. Durch die Scherung wird eine Durchmischung und mechanische Bearbeitung der Suspension bewirkt, welche das Verdampfen des Nicht-Lösungsmittels beschleunigt und der Produktion einer durchmischten, homogenen Lösung zuträgt.

Vorzugsweise wird am Einlass 1,5 kg/h bis 30 kg/h Suspension pro Streichelement, vorzugsweise 5 kg/h bis 20 kg/h Suspension pro Streichelement, eingebracht. Vorzugsweise werden 20 bis 5000 Streichelemente vorgesehen, z.B. 25 bis 4000 oder 30 bis 3000 oder 40 bis 2000 Streichelemente. Vorzugsweise werden pro Stunde 300 kg bis 100000 kg, vorzugsweise 10000 kg bis 50000 kg, Suspension eingebracht.

Eine im Lyocell-Verfahren bevorzugte Filmdicke (Schichtdicke) der Suspension in der Prozesszone ist 1 mm bis 50 mm, vorzugsweise 2,0 mm bis 15 mm, insbesondre bevorzugt 2,2 mm bis 5 mm. Die Schichtdicke kann durch die eingebrachte Suspensionsmenge sowie der Bearbeitungsgeschwindigkeit (Rotationsrate, Anzahl der Streichelemente, insb. der Förderelemente, deren Winkel und dadurch den Vortrieb) gesteuert werden. Ebenso wird dies durch den Abstand des radial äußersten Endes der Streichelemente von der Gehäusemantelinnenfläche gesteuert. Dieser Abstand ist vorzugsweise im Durchschnitt im Bereich von 1 mm bis 50 mm, vorzugsweise 2,0 mm bis 15 mm, insbesondre bevorzugt 2,2 mm bis 5 mm.

In bevorzugten Ausführungsformen ist im Durchschnitt ein Streichelement auf einer Fläche von 0,8 dm² bis 2 dm² in Kontakt mit der Suspension oder Lösung.

In bevorzugten Ausführungsformen ist die Rotorspitzenblatt Belastungsfläche eine wichtige Größe für die aktive Behandlungsfläche der Suspension. Das hat wiederum einen sehr großen Einfluss auf die Qualität der Celluloselösung am Austrag. Diese Rotorspitzenblatt Belastungsfläche stellt die Summe der Stirnfläche aller Streichelemente und Förderelemente (gemeinsam 'Rotorblätter') in der Prozesszone dar. Deren Ende oder 'Spitze' wird durch eine Fläche gebildet, genannt 'Stirnfläche'. Als Stirnfläche wird jene Fläche eines Streich- oder Förderelements bezeichnet, welche der Gehäusemantelinnenfläche gegenüber steht. Üblicherweise haben die Streich- und Förderelemente eine Fläche an ihrer Spitze (maximaler Abstand zur Rotorachse), welche der Kontur der Gehäusemantelinnenfläche folgt und zu ihr im konstanten Abstand verläuft. Die der Gehäusemantelinnenfläche gegenüberstehende Fläche ist insbesondere in der Behandlungszone bei den Streich- und Förderelementen relevant, weniger bei Auftriebselementen. Es hat sich gezeigt, dass dieser Parameter (siehe Tabelle, ad) in der getesteten Dünnschichtbehandlungsvorrichtung ca. 0,02 m² ist. Entsprechend der Anforderungen an eine großtechnische Anlage wird dieser Parameter größer sein, vorzugsweise im Bereich von 0,02 m² - 6 m², besonders bevorzugt im Bereich von 2 m² - 6 m² und besonders bevorzugt im Bereich von 4 m² - 6 m². In diesen Bereichen wird eine günstige Leistung der Antriebseinheit des Rotors erreicht. Gleichzeitig zeigt die ausgetragene Celluloselösung eine sehr gute Qualität in Hinblick auf Vollständigkeit der Auflösung der Cellulose und Homogenität der Celluloselösung.Ein weiterer Parameter ist die Eingriffsspitzenleistung (siehe Tabelle af). Diese errechnet sich aus der eingebrachten Menge an Suspension in kg pro Sekunde bezogen auf die Summe der Stirnfläche der Streich- und Förderelemente in der Prozesszone in $m^2$. Die besten Cellulose Qualitäten wurden erreicht, wenn dieser Parameter im Bereich von 1,10 - 1,40 $kg/sm^2$ ist. Bei höheren Werten, wie etwa über 5,5 $kg/sm^2$, verschlechtert sich die Homogenität der ausgetragenen Masse/Lösung am Austritt. Die Eingriffsspitzenleistung ist ein wichtiger Parameter zur Bestimmung der sinngemäßen Auslegungsparameter des vorliegenden Verfahrens. Diese wird besonders durch die Mengen an eingetragener Suspension pro Zeiteinheit bestimmt. Wird zu viel Suspension eingetragen, so wird das Verfahren überstrapaziert und die Cellulose löst sich nicht in hinreichender Menge in dem Lösungsmittel auf. Das hat zur Folge, dass die dem Verfahren nachgeschalteten Prozesse schlecht oder gar nicht funktionieren.

Vorzugsweise hat die Suspension eine Filmdicke (Schichtdicke) gemäß der Formel s= $(ln(m_s/60))/x$, wobei s die Filmdicke in mm, $m_s$ der Förderstrom der Suspension und x eine Konstante von 0,45 bis 7, vorzugsweise von 0,5866, ist. Vorzugsweise wird diese Filmdicke in der Prozesszone erreicht.

Selbstverständlich können diese Parameter miteinander kombiniert werden. Beispielsweise ist es besonders bevorzugt, wenn der Austrag am Auslass mindestens 300 kg/h, speziell bevorzugt mindestens 350 kg/h, Cellulose-Lösung pro $m^2$ der Oberfläche des (mit einem Wärmetauscher) temperierten Gehäusemantels (Innenwand) ist; und die mittlere Behandlungszeit (Zeit von Einlass bis Auslass) der Cellulose im Prozessgehäuse mindestens 150 s, vorzugsweise 150 s bis 1000 s, ist; und die (einzelnen oder mehreren) Streichelemente in Folge über einen Abschnitt mit einem Wärmetauscher temperierten Gehäusemantel mit einer Frequenz von 1500 bis 4000 pro min bewegt werden (Streichelementfrequenz) und/oder die Schergeschwindigkeit der filmartig aufgebrachten und verteilten Suspension durch die Einwirkung der Streichelemente 3000 $s^{-1}$ bis 30000 $s^{-1}$ ist.

Vorzugsweise ist die gemeinsame Achse der rotierenden Streichelemente um maximal 20° zur Horizontalen geneigt. Obwohl im Verfahrensaspekt bei Einhaltung der erfindungsgemäßen Parameter, insbesondere des Vortriebs, eine verbesserte Lösungsherstellung auch ohne horizontale Ausrichtung erreicht wird, so ist diese dennoch bevorzugt. Daher wird im erfindungsgemäßen Verfahren die Dünnschichtbehandlungsvorrichtung wie oben beschrieben - in jeder der beschriebenen besonderen oder vorzugsweisen Ausführungsform - ohne notwendigerweise die horizontale Ausrichtung einzuhalten - verwendet.

Das Lösungsmittel ist ein Mittel, um Cellulose zu lösen. Üblicherweise werden hierbei hohe Temperaturen eingesetzt, z.B. 70°C oder mehr, insbesondere 75°C oder mehr oder 78°C oder mehr. Meist wird es mit einem Nicht-Lösungsmittel, also einer Substanz, die Cellulose nicht auflösen kann, gemischt, um eine Suspension zu erhalten und später die Lösung, wobei die Mischung weiterhin zum Auflösen von Cellulose geeignet ist. Hierbei werden u.a. hohe Anteile des Lösungsmittels in der Mischung notwendig, z.B. 60% (Masse-%) oder mehr - je nach Lösungsmittel kann dies unterschiedlich sein und der Anteil leicht in Lösungsversuchen von einem Fachmann festgestellt werden.

Vorzugsweise hat die Celluloselösung eine Cellulosekonzentration in für Lyocell-Verfahren üblichen Größen. So kann die Cellulosekonzentration in der Celluloselösung 4% bis 23%, vorzugsweise 6% bis 20%, insbesondere 8% bis 18% oder 10% bis 16%, sein (alle %-Angaben in Masse-%).

Vorzugsweise ist der Absolut-Druck im Reaktor unter 100 mbar, insbesondere zwischen 40 mbar und 70 mbar.

Vorzugsweise ist das Lösungsmittel von Cellulose ein tertiäres Aminoxid (Amin-N-oxid), insbesondere bevorzugt N-Methylmorpholin-N-oxid. Es kann alternativ oder zusätzlich ein ionisches Lösungsmittel sein. Derartige ionische Lösungsmittel sind beispielsweise in WO 03/029329; WO 2006/000197 A1; WO 2007/076979 A1; Parviainen et al., RSC Adv., 2015, 5, 69728-69737; Liu et al., Green Chem. 2017, DOI: 10.1039/c7gc02880f; Hauru et al., Zellulose (2014) 21:4471-4481; Fernàndez et al. J Membra Sci Technol 2011, S:4; etc. beschrieben und enthalten vorzugsweise organische Kationen, wie z.B. Ammonium-, Pyrimidium-, Pyridinium-Pyrrolidinium- oder Imidazoliumkationen, vorzugsweise 1,3-Dialkyl-imidazolium Salze, wie Halogenide. Wasser wird auch hier vorzugsweise als zugesetztes Nicht-Lösungsmittel verwendet. Besonders bevorzugt ist eine Lösung von Cellulose und 1-Butyl-3-methyl-imidazolium (BMIM), z.B. mit Chlorid als Gegenion (BMIMC1), oder 1-Ethyl-3-methyl-imidazolium (auch vorzugsweise als Chlorid, Acetat oder Diethylphosphat), oder 1-Hexyl-3-methylimidazolium oder 1-Hexyl-1-methylpyrrolidinium (vorzugsweise mit einem bis (Trifluoromethylsulfonyl) amid Anion), und Wasser. Weitere ionische Lösungsmittel sind 1,5-Diazabicyclo[4.3.0]non-5-enium, vorzugsweise als Acetat; 1-Ethyl-3-methylimidazoliumacetat, 1,3-Dimethylimidazolium-acetat, 1-Ethyl-3-methylirnidazolium-chlorid, 1-Butyl-3-methylimidazolium-acetat, 1-Ethyl-3-methylimidazolium-diethylphosphat, 1-Methyl-3-methylimidazolium-dimethylphosphat, 1-Ethyl-3-methylimidazolium-formiat, 1-Ethyl-3-methylimidazolium-octanoat, 1,3-Diethylimidazolium-acetat und 1-Ethyl-3-methylimidazolium-propionat.

Eine Suspension, die im erfindungsgemäßen Verfahren vorzugsweise verarbeitet wird, enthält zwischen 58 und 75,3 Masse-% N-Methylmorpholin-N-oxid (NMMNO oder NMMO), zwischen 19 und 26,1 Masse-% Wasser und zwischen 5,7 und 15,9 Masse-% Cellulose. Das Herstellen von Celluloselösungen mit bis zu 20 Massen-% Cellulose oder mehr ist möglich.

Die vorliegende Erfindung wird anhand der beiliegenden Figuren weiter illustriert.

Es zeigt:

Fig. 1    eine schematische Darstellung einer erfindungsgemässen Dünnschichtbehandlungs-vorrichtung in seitlicher Ansicht;

Fig. 2    die in Fig. 1 gezeigte Dünnschichtbehandlungsvorrichtung in Ansicht von oben;

Fig. 3    eine weitere Dünnschichtbehandlungsvorrichtung von oben;

Fig. 4    das Prozessgehäuse der in Fig. 3 gezeigten Dünnschichtbehandlungsvorrichtung im Querschnitt durch die Ebene A-A der Fig. 3;

Fig. 5    einen Teil einer Rotorwelle für die erfindungsgemässe Vorrichtung in perspektivischer Ansicht;

Fig. 6    eine perspektivische Ansicht eines Teils einer weiteren Rotorwelle einer erfindungsgemässen Dünnschichtbehandlungsvorrichtung in dem der Einlasszone entsprechenden Bereich;

Fig. 7    die in Fig. 6 gezeigte, in einem Prozessgehäuse angeordnete Rotorwelle im Querschnitt;

Fig. 8    die Auslasszone einer weiteren Ausführungsform der erfindungsgemässen Dünnschichtbehandlungsvorrichtung mit einem vertikal verlaufenden Austragssystem in seitlicher Ansicht;

Fig. 9    die Auslasszone der in Fig. 8 gezeigten Ausführungsform in der Draufsicht von oben;

Fig. 10    die in Fig. 8 gezeigte Ausführungsform in der Draufsicht von vorne; und

Fig. 11    die Auslasszone einer weiteren Ausführungsform der erfindungsgemässen Dünnschichtbehandlungsvorrichtung mit einem horizontal verlaufenden Austragssystem in seitlicher Ansicht.

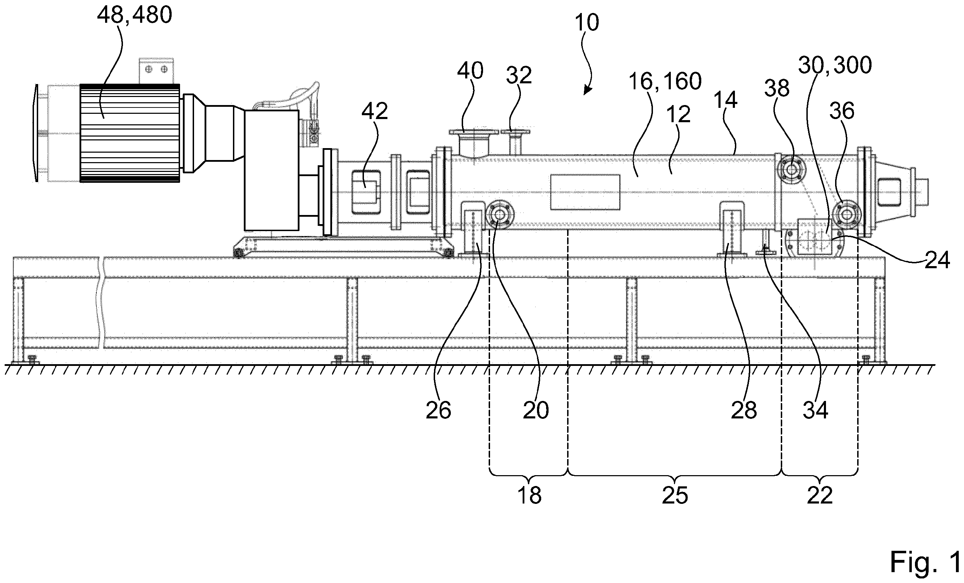

Die in Fig. 1 gezeigte Dünnschichtbehandlungsvorrichtung 10 weist ein Prozessgehäuse 12 auf mit einem Gehäusemantel 14, welcher einen sich in axialer Richtung erstreckenden kreiszylindrischen Gehäuseinnenraum 16 umschliesst. Dieser Gehäuseinnenraum bildet den Materialbehandlungsraum 160.

In einem proximalen Endbereich des Prozessgehäuses 12 ist ein Einlassstutzen 20 zum Einführen des zu behandelnden Materials in den Materialbehandlungsraum 160 angeordnet, während in einem distalen Endbereich des Prozessgehäuses 12 ein Auslassstutzen 24 zum Austragen des Materials aus dem Materialbehandlungsraum 160 angeordnet ist. Der proximale Endbereich entspricht somit der Einlasszone 18 des Prozessgehäuses, während der distale Endbereich der Auslasszone 22 entspricht. Zwischen der Einlasszone und der Auslasszone liegt eine Prozesszone 25.

Das Prozessgehäuse 12 ist über entsprechende Stützlager im proximalen und im distalen Endbereich abgestützt, konkret über ein Festlager 26 im proximalen Endbereich und ein Loslager 28 im distalen Endbereich.

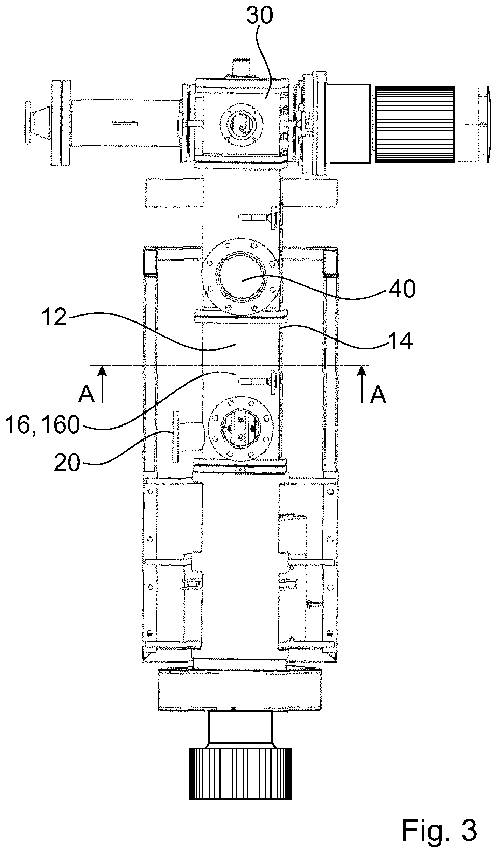

Der Einlassstutzen 20 ist in der gezeigten Ausführungsform tangential zum Gehäusemantel 14 angeordnet und mündet in der unteren Hälfte in den Materialbehandlungsraum 160, wie insbesondere aus Fig. 3 ersichtlich ist.

Der Auslassstutzen 24 ist in der gezeigten Ausführungsform in Form einer Öffnung ausgestaltet, die an der untersten Stelle des Gehäusemantels 14 in ein unmittelbar darunter angeordnetes Austragssystem 30 mündet, im konkreten Fall in eine Austragsdoppelschnecke 300 mit rechtwinklig zur Achsrichtung des Prozessgehäuses 12 verlaufender Förderrichtung.

Der Gehäusemantel 14 ist in der gezeigten Ausführungsform doppelwandig ausgebildet, weist also eine Gehäusemantelinnenwand und eine Gehäusemantelaussenwand mit einem dazwischenliegenden Zwischenraum auf, in dem eine Leitspirale zur Leitung eines Wärmeträgermediums, typischerweise Wasserdampf oder Warmwasser, angeordnet ist. Im konkret gezeigten Fall liegen zwei Wärmeträgerkreisläufe vor, ein erster Wärmeträgerkreislauf mit einem ersten Wärmeträgereintritt 32 in der Einlasszone bzw. im einlassseitigen Bereich der Prozesszone 25 und einem ersten Wärmeträgeraustritt 34 im auslassseitigen Bereich der Prozesszone 25 sowie ein zweiter Wärmeträgerkreislauf mit einem zweiten Wärmeträgereintritt 36 in einem distalen Bereich der Auslasszone 22 und einem zweiten Wärmeträgeraustritt 38 in deren proximalem Bereich. Die beiden Wärmeträgerkreisläufe weisen voneinander getrennte Leitspiralen auf und sind somit unabhängig voneinander temperierbar. Hierzu ist dem jeweiligen Wärmeträgerkreislauf ein separates Heizelement und Kühlelement (nicht gezeigt) zur Temperierung des Wärmeträgermediums zugeordnet, von wo aus es über eine Wärmeträgerpumpe über den Wärmeträgereintritt 32 bzw. 36 in die jeweilige Leitspiral eingeführt wird. Denkbar ist etwa, dass in dem der Prozesszone 25 zugeordneten ersten Wärmeträgerkreislauf Wasserdampf und in dem der Auslasszone 22 zugeordneten zweiten Wärmeträgerkreislauf Warmwasser als Wärmeträgermedium verwendet wird.

Im Gehäusemantel 14 ist im Übrigen ein nach oben verlaufender Brüdenstutzen 40 angeordnet, über welchen die tiefersiedenden Bestandteile aus dem Materialbehandlungsraum 160 abgezogen werden können.

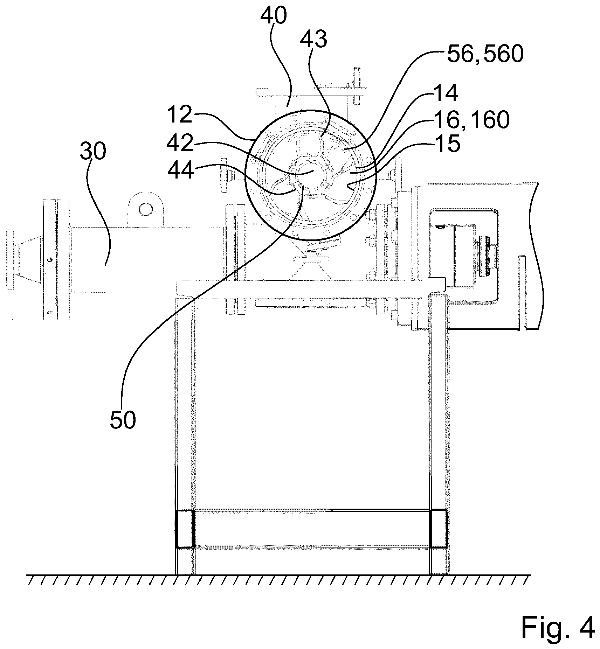

Die Vorrichtung weist zudem einen Rotor 42 auf, welcher eine im Gehäuseinnenraum 16 angeordnete und sich koaxial erstreckende, antreibbare Rotorwelle 44 zur Erzeugung eines Materialfilms auf der Gehäusemantelinnenfläche 46 umfasst, wie etwa in Fig. 4 gezeigt ist.

Der Rotor 42 weist hierzu einen Antrieb 48 auf, der bevorzugt drehzahlvariabel ausgeführt ist. Im konkret gezeigten Fall liegt ein Stirnradgetriebemotor 480 vor, welcher an einem Antriebswellenabschnitt der Rotorwelle 44 ansetzt, um diese in Rotation zu versetzen. Die Abdichtung des Antriebswellenabschnitts zum Materialbehandlungsraum 160 erfolgt dabei über eine Gleitringdichtung.

Die Erzeugung des Materialfilms auf der Gehäusemantelinnenfläche 15 und die Förderung des Materials in Richtung zum Auslassstutzen hin erfolgt über Streichelemente 43, welche je nach ihrer primären Funktion in Verteilelemente 431 und in Förderelemente 432 unterteilt werden, wie weiter unten ausgeführt werden wird.

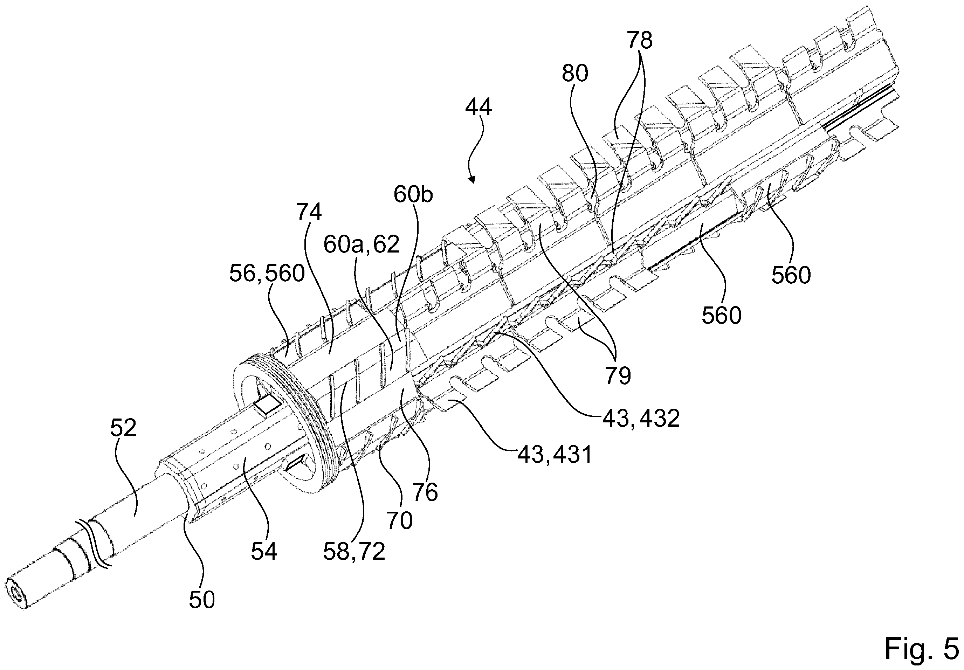

Eine Rotorwelle für eine erfindungsgemässe Vorrichtung ist in Fig. 5 gezeigt. Diese weist einen Rotorwellenkörper 50 auf, welcher einen Schaft 52 und sechs darauf aufgeschweisste und auf dessen Umfang verteilt angeordnete, axial verlaufende Befestigungsleisten 54 umfasst. An diesen Befestigungsleisten 54 sind Auftriebselemente 56 angeflanscht, welche im konkret gezeigten Fall in Form von giebeldachförmigen Stegblechen 560 vorliegen, dessen Dachfirst 58 wenigstens annähernd parallel zur Achsrichtung der Rotorwelle 44 verläuft.

Durch die Winkelform wird das Stegblech 560 in eine erste und zweite Stegblechfläche 60a bzw. 60b unterteilt, welche in zueinander schräg verlaufenden Ebenen liegen. Die in Rotationsrichtung vorlaufende erste Stegblechfläche 60a bildet dabei den Anströmungsabschnitt 62 des Auftriebselements 56. Das in Rotationsrichtung vorlaufende Ende 64 des Anströmungsabschnitts 62 ist dabei in grösserem Abstand von der Gehäusemantelinnenfläche 15 angeordnet als ein dem vorlaufenden Ende nachlaufender Bereich 66 des Anströmungsabschnitts 62. Dadurch wird zwischen dem Anströmungsabschnitt 62 und der Gehäusemantelinnenfläche 15 ein sich in Gegenrichtung zur Rotationsrichtung kontinuierlich verengender Spalt 68 ausgebildet. Bei der Rotation der Rotorwelle wird nun das zu bearbeitende hochviskose Material in den Spalt 68 gedrückt, wodurch die am Anströmungsabschnitt 62 angreifende Strömungskraft der Rotorwelle 44 eine hydrodynamische Auftriebskomponente senkrecht zur Anströmungsrichtung verleiht und somit einer Durchbiegung der Rotorwelle 44 entgegenwirkt.

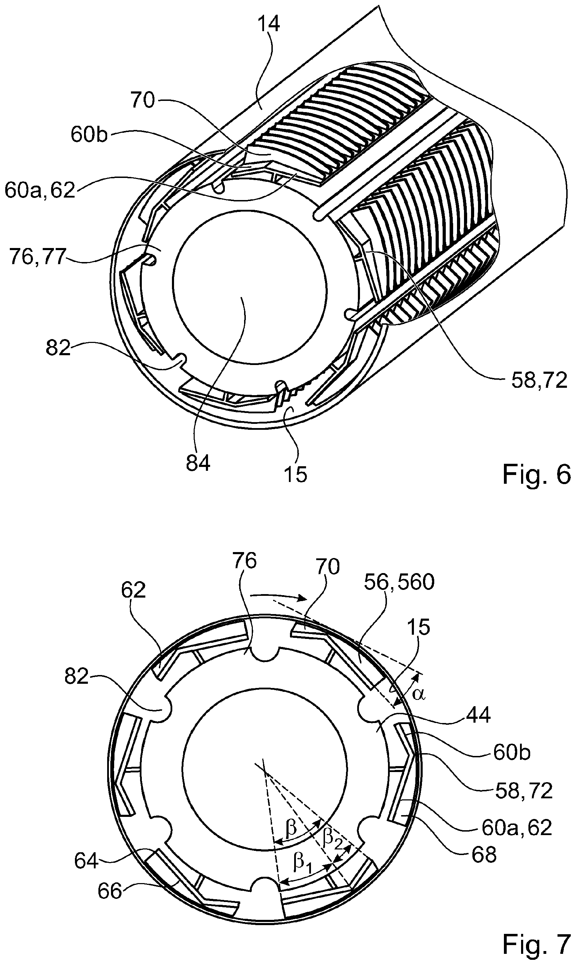

In dem in Fig. 7 konkret gezeigten Fall schliesst die erste Stegblechfläche 60a bzw. der Anströmungsabschnitt 62 zur Tangente bzw. zur Tangentialebene der Gehäusemantelinnenfläche 15 einen Winkel $\alpha$ ein und deckt einen Winkelbereich $\beta_1$ des Umfangs des Rotorwellenkörpers 50 ab. Der nachlaufende Stegblechfläche deckt einen Winkelbereich $\beta_2$ ab. Insgesamt deckt das Auftriebselemente somit einen Winkel $\beta$ ab.

Auf der radialen Aussenseite der Stegbleche 560 sind helikal verlaufende Förderrippen 70 angeordnet, welche bezogen zur Achsrichtung der Rotorwelle 44 angewinkelt ausgerichtet sind.

Der Dachgiebel 58 des Stegblechs 560 bildet eine axial verlaufende Scherkante 72, welche gegenüber der radialen Aussenkante der Förderrippe 70 zurückversetzt ist und somit im Vergleich zu dieser von der Gehäusemantelinnenfläche 15 in einem grösseren Abstand angeordnet ist.

Somit wird durch die an der Rotorwelle 44 angeordneten Stegbleche 560 der Rotorwelle 44 einerseits wie erwähnt eine hydrodynamische Auftriebskomponente in Richtung zum zentralen Rotorwellenkörper 50 verliehen. Andererseits wird das Material durch die axial verlaufende Scherkante 72 auf der Gehäusemantelinnenfläche 15 verteilt, wobei ihm durch die Förderrippen 70 zusätzlich eine Förderkomponente in Richtung zum Auslassstutzen hin verliehen wird. Mithin stellen die als Auftriebselemente 56 fungierenden Stegbleche 560 auch Streichelemente zur Verteilung und Förderung des Materials und somit Förderverteilelemente dar.

Wie aus Fig. 5 hervorgeht, sind die Rotorgeometrie bzw. die am Rotorwellenkörper angeordneten Streichelemente 43 je nach Zonen unterschiedlich ausgestaltet. So sind in der dem proximalen Endbereich entsprechenden Einlasszone ausschliesslich giebeldachförmige Stegbleche 560 angeordnet. Konkret sind sechs Stegbleche über den Umfang der Rotorwelle 44 verteilt angeordnet, wobei jeweils zwei in Umfangsrichtung aufeinanderfolgende Stegbleche derart mit Verbindungsblechen 74 miteinander verbunden sind, dass insgesamt ein Schutzmantel 76 ausgebildet wird.

Durch die Ausbildung eines Schutzmantels 76 wird das zu behandelnde Material und die bei der Behandlung entweichenden gasförmigen Materialkomponenten in der Einlasszone 18 im Gleichstrom geführt, wodurch die Gefahr eines möglichen "Materialmitrisses" durch die entweichenden Komponenten minimiert wird.

Stegbleche 560 sind auch in der an die Einlasszone 18 anschliessenden Prozesszone 25 angeordnet, allerdings sind die Stegbleche in dem der Prozesszone entsprechenden Längsabschnitt der Rotorwelle 44 helikal versetzt zueinander auf dem Rotorwellenkörper 50 angeordnet, wodurch eine optimale Verteilung des Auftriebs bzw. der durch die einzelnen Auftriebselemente erzeugten Auftriebskraft über die gesamte Prozesszone 25 erhalten werden kann.

Um eine ausreichend hohe Förderwirkung zu erzielen, sind nebst den als Auftriebselement und Förderverteilelement fungierenden Stegblechen 560 auch weitere Streichelemente 43 mit erhöhter Förderwirkung angeordnet. Konkret sind in der Prozesszone 25 auch Streichelemente 43 angeordnet, welche Zähne 78 umfassen, deren Scherkante bezogen zur Achsrichtung einen Anstellwinkel von grösser 5° aufweisen und somit ein Förderelement 432 darstellen, nicht aber als Auftriebselement. Konkret liegen Streichblätter 80 mit jeweils mehreren Zähnen 78 mit besagtem Anstellwinkel vor. Des Weiteren liegen Streichelemente 43 mit Zähnen 79 vor, deren Scherkante parallel zur Achsrichtung verläuft und somit förderneutral ist; diese Streichelemente stellen somit reine Verteilelemente 431 dar. Verteilelemente 431 und Förderelemente 432 sind in der gezeigten Ausführungsform in der Prozesszone 25 alternierend angeordnet, wobei wie erwähnt an einem der sechs Befestigungsleisten 54 bzw. in einer der sechs Blattreihen ein Stegblech 560 fixiert ist.

Eine für die Einlasszone 18 besonders bevorzugte Konfiguration der Rotorwelle 44 ist im Übrigen in Fig. 6 und 7 gezeigt. Gemäss dieser liegt eine koaxiale Hülse 77 vor, von welcher Stegbleche 560 radial abstehen und welche als Schutzmantel 76 fungiert. Zwischen jeweils zwei in Umfangsrichtung aufeinanderfolgenden Stegblechen 560 ist auf der Aussenseite der Hülse 77 ein radial zurückversetzter Kanal 82 ausgebildet. Gemäss dieser Ausführungsform können die bei der Bearbeitung des Materials austretenden Brüden durch die Kanäle 82 geführt werden. Nachdem sie das Ende des Schutzmantels 76 erreicht haben, gelangen die Brüden durch den vom Schutzmantel 76 bzw. der Hülse 77 umgebenen Innenraum 84 zu einem vom Materialbehandlungsraum 160 in der Regel über eine Labyrinthringdichtung abgetrennten Brüdenraum, von wo aus sie über einen Brüdenstutzen 40 abgeführt werden können.

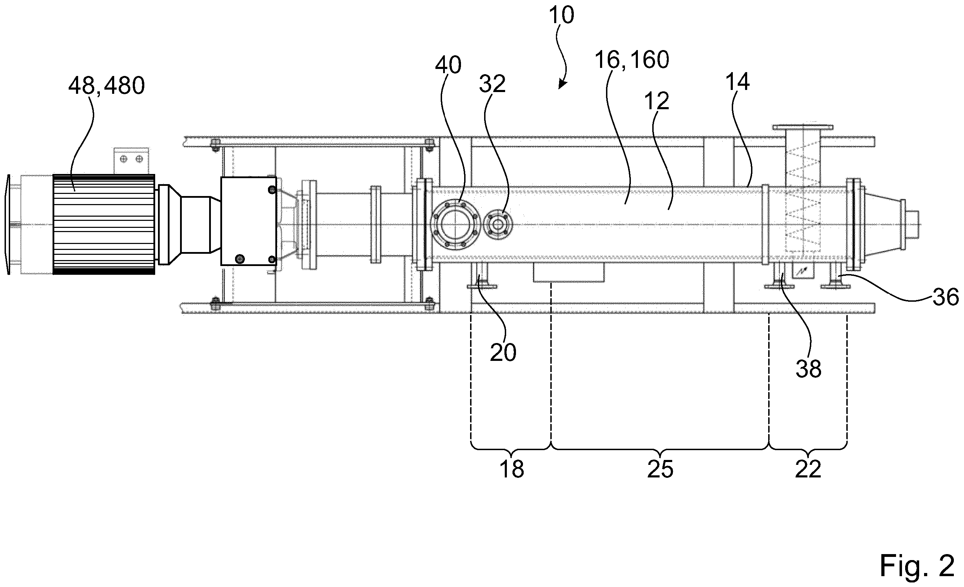

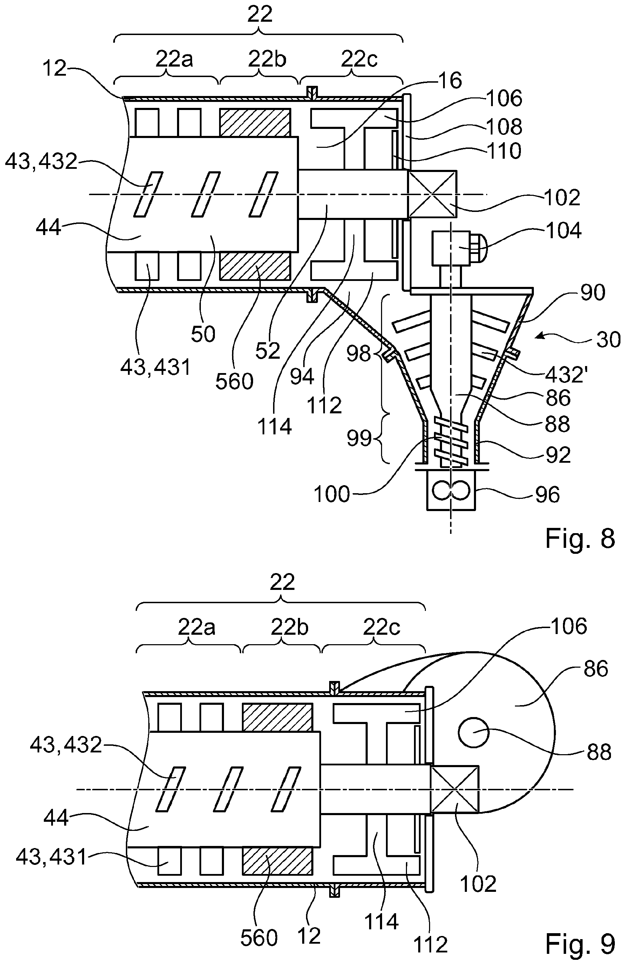

Alternativ zu dem in Fig. 1 bis 4 gezeigten Austragssystem in Form einer Austragsdoppelschnecke mit horizontal und rechtwinklig zur Achsrichtung des Prozessgehäuses verlaufender Förderrichtung kann die erfindungsgemässe Dünnschichtbehandlungsvorrichtung alternativ ein Austragssystem 30 mit vertikaler Förderrichtung umfassen, wie es in den Fig. 8 bis 10 gezeigt ist.

Gemäss dieser alternativen Ausführungsform umfasst das Austragssystem 30 einen Trichter 86 mit einer darin angeordneten und sich koaxial erstreckenden Austragswelle 88. Der Trichter weist einen sich in Förderrichtung verjüngenden, annähernd konischen Trichterabschnitt 90 und einen daran anschliessenden zylindrischen Trichterabschnitt 92 auf. In seinem einlassseitigen (weiten) Bereich weist der sich verjüngende Trichterabschnitt 90 eine Trichteröffnung 94 auf, über die der Trichter 86 mit dem Gehäuseinnenraum 16 des Prozessgehäuses 12 verbunden ist. Auslassseitig ist der Trichter 86 bzw. der zylindrische Trichterabschnitt 92 mit einer Austragspumpe 96 verbunden, über die das auszutragende Material abgeführt bzw. weiteren Vorrichtungen, wie z.B. einem Filter und/oder einer Spinndüse, zugeführt werden kann.

Die Austragswelle 88 weist einen ersten Austragswellenabschnitt 98 auf, auf welchem Förderelemente 432' angeordnet sind, mittels welcher das auszutragende Material in Richtung zum zylindrischen Trichterabschnitt 92 hin gefördert wird. Dieser zylindrische Trichterabschnitt 92 dient als Lagerbuchse für einen darin angeordnete zweiten Austragswellenabschnitt 99 mit einer darauf ausgebildeten Austragsmonoschnecke 100 zur Förderung des Materials zur Austragspumpe 96 hin.

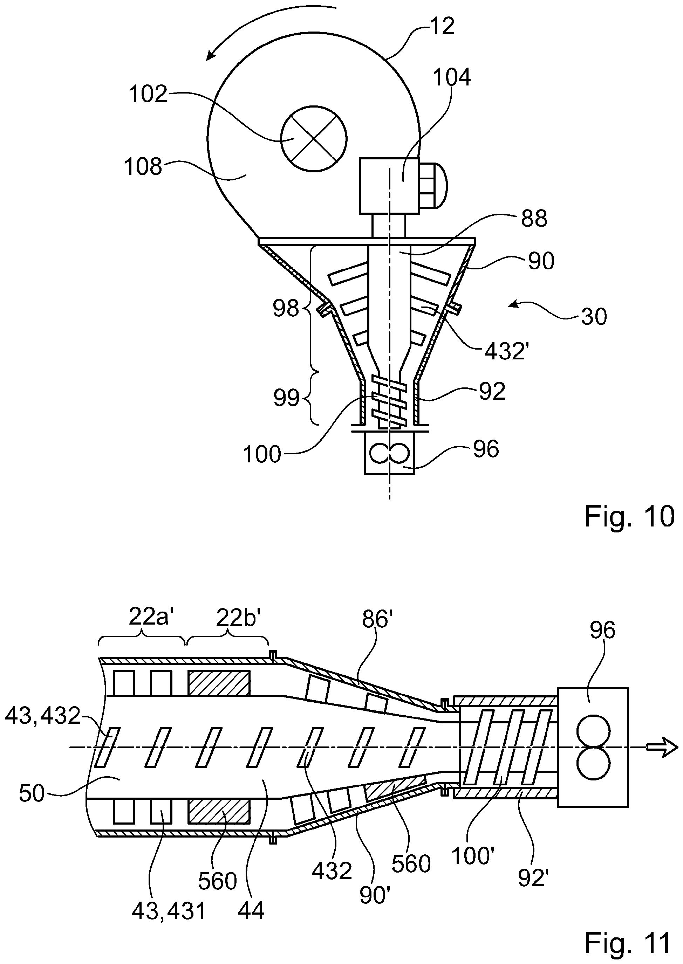

Wie insbesondere aus Fig. 9 und 10 hervorgeht, ist die Rotorwelle 44 distal in einem Drehlager gelagert, welches an der distalen Stirnseite des Prozessgehäuses 12 angeordnet ist. Der Trichter 86 ist bezogen zur Achsrichtung der Rotorwelle 44 bzw. des Prozessgehäuses 12 versetzt angeordnet, derart, dass ausreichend Platz für die sich neben dem distalen Drehlager 102 nach oben erstreckende Austragswelle 88 vorliegt, welche an ihrem oberen Ende mit einem Austragswellenantrieb 104 verbunden ist. Aufgrund der versetzten Anordnung des Trichters bzw. um bei dieser Anordnung einen optimalen Öffnungsquerschnitt der Trichteröffnung zu gewährleisten, weicht der Trichter 86 in seinem oberen einlassseitigen Bereich von der konischen Form ab, wie insbesondere in den Figuren 8 und 9 gezeigt ist.

In seinem distalen Endbereich sind auf dem Rotorwellenkörper 50 mindestens zwei umlaufende Räumer 106 angeordnet, mittels welchen das Material in die auf der Unterseite des Prozessgehäuses 12 vorliegende Trichteröffnung 94 gefördert wird. Konkret weisen die Räumer 106 jeweils einen Räumerbarren 112 auf, welcher über einen Räumerarm 114 am Schaft 52 des Rotorwellenkörpers 50 befestigt ist und mittels welchem das auszutragende Material zur Trichteröffnung 94 hin geschoben wird.

Unmittelbar benachbart zur distalen Stirnseite 108 des Prozessgehäuses 12 ist im Übrigen ein scheibenförmiges Abreinigungselement 110 am Rotorwellenkörper 50 angeordnet, welches verhindert, dass sich an der Innenfläche der distalen Stirnseite 108 Material ablagern kann und welche ferner auch das distale Drehlager 102 vor Verunreinigung durch das Material schützt.

Wie in Fig. 8 und 9 gezeigt liegen in der Auslasszone 22 der gezeigten Ausführungsform drei Auslasszonenabschnitte 22a, 22b, 22c vor. Im ersten Auslasszonenabschnitt 22a sind auf dem entsprechenden Längsabschnitt des Rotorwellenkörpers 50 Streichelemente 43 angeordnet, welche Zähne umfassen, deren Scherkante bezogen zur Achsrichtung einen Anstellwinkel von ca. 45° aufweisen, und welche somit als Förderelemente 432 fungieren. Im Umfangsrichtung alternierend mit den Förderelementen 432 sind im ersten Auslasszonenabschnitt 22a Verteilelemente 431 angeordnet, konkret Streichelemente mit Zähnen, deren Scherkante parallel zur Achsrichtung des Prozessgehäuses 12 bzw. der Rotorwelle 44 verläuft. Alternativ ist auch denkbar, dass nur Förderelemente 432 vorliegen, wodurch sich im ersten Auslasszonenabschnitt 22a eine erhöhte Förderwirkung ergibt.

In der in Förderrichtung an den ersten Auslasszonenabschnitt 22a anschliessenden zweiten Auslasszonenabschnitt 22b alternieren die Förderelemente 432 in Umfangsrichtung mit Stegblechen 560, wie sie im Zusammenhang mit Fig. 5 beschrieben wurden und welche als Auftriebselement und als Förderverteilelement fungieren.

Im daran in Förderrichtung anschliessenden dritten Auslasszonenabschnitt 22c wiederum, welcher in den Trichter 86 mündet, sind lediglich die oben beschriebenen Räumer 106 auf dem Rotorwellenkörper angeordnet. Im Gegensatz zu den im ersten Auslasszonenabschnitt vorliegenden förderneutralen Verteilelementen 431 liegen im zweiten Auslasszonenabschnitt somit zusätzlich zu den Förderelementen 432 weitere Elemente vor, die dem Material eine Förderkomponente verleihen, womit auch dann eine zulässige Förderung zum dritten Auslasszonenabschnitt 22c bzw. den Räumern 106 gewährleistet wird, wenn das Material eine sehr hohe Viskosität aufweist. Während die im Zusammenhang mit Fig. 5 diskutierten Förderrippen in der Prozesszone nur einen relativ geringen Winkel von z.B. 5° mit der Achse einschliessen, ist dieser Winkel für die Förderrippen der in der Auslasszone angeordneten Stegbleche 560 grösser und kann insbesondere 45° betragen, wodurch eine gegenüber der Prozesszone stärkere Förderwirkung erhalten wird.

Die in den Fig. 8 bis 10 gezeigte Ausführungsform weist den Vorteil auf, dass die Drehzahl der im Prozessgehäuse vorliegenden Rotorwelle 44 von derjenigen der Austragswelle 88 entkoppelt werden kann.

Alternativ zu der in Fig. 8 bis 10 gezeigten Ausführungsform ist in der in Fig. 11 gezeigten Ausführungsform das Austragssystem horizontal ausgerichtet. Konkret weist das Austragssystem 30 einen an das Prozessgehäuse angeflanschten Trichter 86' auf, in welchen die Rotorwelle 44 hineinragt. Der Trichter 86' weist einen sich konisch verjüngenden Trichterabschnitt 90' auf, der an seinem weiten proximalen Ende über eine Flanschverbindung mit dem Prozessgehäuse 12 verbunden ist und dessen Achse mit der Achse des Prozessgehäuse zusammenfällt; im Trichterabschnitt 90' verjüngt sich der Durchmesser der Rotorwelle 44 entsprechend. An diesen konischen Trichterabschnitt 90' schliesst in Förderrichtung ein zylindrischer Trichterabschnitt 92' an, welcher als Lagerbuchse für die darin angeordnete Austragsmonoschnecke 100' dient.

Wie in der im Zusammenhang mit der in den Fig. 8 bis 10 gezeigten Ausführungsform beschrieben, weist auch die Auslasszone der in Fig. 11 gezeigten Ausführungsform einen ersten Auslasszonenabschnitt 22a' und einen in Förderrichtung an den ersten Auslasszonenabschnitt anschliessenden zweiten Auslasszonenabschnitt 22b' auf. Auch in dieser Ausführungsform sind im zweiten Auslasszonenabschnitt 22b' anstelle der im ersten Auslasszonenabschnitt 22a' vorliegenden förderneutralen Verteilelementen 431 Stegbleche 560 ausgebildet, die sowohl als Auftriebselemente als auch als Förderverteilelemente fungieren. Auch in dem in den Trichter 86' ragenden Bereich der Rotorwelle 44 sind - wie im zweiten Auslasszonenabschnitt 22b' - nebst den Förderelementen 432 auch Stegbleche 560 auf dem Rotorwellenkörper 50 angeordnet. Konkret sind die Stegbleche 560 dabei helikal versetzt zueinander angeordnet.

Eine Dünnschichtbehandlungsvorrichtung mit einem Innendurchmesser des Gehäusemantelinnenraums von 280 mm, und einem Umfang von 0,88 m wurde in einem Experiment zur Herstellung einer Lösung von Cellulose in NMMNO/Wasser verwendet. Die horizontale Rotorwelle wurde mit unterschiedlichen Streichelementen bestückt, die in maximal 8 horizontalen Reihen um die Rotorwelle herum angeordnet wurden, wobei in der Prozesszone jede 2. Reihe der Streichelemente um einen Winkel von $\alpha$ = 20 ° geneigt war, die restlichen Rotorblätter waren nicht geneigt. Der Abstand der äußeren Enden der Streichelemente zueinander betrug zwischen 108 und 216 mm. Die Streichelemente wiesen eine Eingriffsfläche in die horizontal bewegte Suspension von maximal 1,9 dm$^2$ auf, die der beheizten Mantelinnenfläche zugewandt und von der Mantelinnenfläche des Prozessgehäuses zwischen 2,75 und 3,5 mm entfernt waren. Der horizontal gelagerte Rotor wurde mit einer maximalen Drehzahl von 650 min$^{-1}$ betrieben, sodass die Umfangsgeschwindigkeit der Spitzen der Streichelemente maximal 9,3 m/s und die maximale Folgefrequenz der Streichelemente 2.600 pro Minute betrug. Weitere Parameter sind in Tabelle 1 angegeben.

Zur Herstellung der Celluloselösung wurde die eingesetzte Cellulose vom Typ Eukalyptuszellstoff in entsalztem Wasser suspendiert. Nach vollständiger Suspendierung der Cellulosefasern im Wasser, wurde das überschüssige Wasser durch Filtration abgetrennt und der erhaltene Zellstoffkuchen auf eine Feststoffkonzentration von ca. 50% Cellulose abgepresst. Im Anschluss an die Entwässerung wurde der Zellstoffkuchen zur Zerfaserung über eine Nadelwalze und Shredder geführt. Die erhaltene, feinzerfaserte feuchte Cellulose wurde im kontinuierlichen Ablauf in eine wässrige tertiäre Aminoxidlösung (NMMNO) eingetragen, um die Suspension zu erzeugen. Ringschichtmischer und/oder Turbulentmischer sind hierfür die geeigneten Apparate.

Die Suspension aus Wasser, Cellulose und NMMNO mit unterschiedlicher Zusammensetzung (s. Tabelle 1, Reihen b, c, d) wurde im weiteren Prozessablauf, zur Herstellung der Celluloselösung, in die Dünnschichtbehandlungsvorrichtung eingebracht. Es hat sich als vorteilhaft herausgestellt, wenn die eingebrachte Suspension einen massebezogenen Wasseranteil von 19% bis 26%, Celluloseanteil von 5,7% bis 11,9% und NMMNO Anteil von 65%-75% hat. Mit solchen Suspensionen kann eine gute Verteilung der Suspension in der Eintragszone erreicht werden.

Es hat sich gezeigt, dass die Umwandlung von der Ausgangzusammensetzung (Index in den Formel = vorher) zur Zielzusammensetzung (Index in den Formeln = nachher) vorteilhaft einem bestimmten Verhältnis folgt. Dieses

$$\frac{c_{H2O,vorher}}{c_{H2O,nachher}} = \frac{41{,}1+1{,}91 c_{Cell,\ vorher}}{47{,}9-1{,}43 c_{Cell,\ nachher}}$$

Verhältnis hat sich als geeignet erwiesen, wenn die Formel erfüllt ist, wobei die Differenz auf 100% jeweils die NMMNO Konzentrationen bilden. Alle Konzentrationen ($c_{H2O}$, $c_{Cell}$) sind in Massenprozent angegeben. Erstaunlicherweise zeigten sich die besten Ergebnisse, wenn das Verhältnis von $\dfrac{c_{H2O,vorher}}{c_{H2O,nachher}}$

im Bereich von 1,8 bis 2,5 lag und das Verhältnis $\dfrac{c_{Cell,\,vorher}}{c_{Cell,\,nachher}}$ von 0,8-0,95 war.

Durch das Durchlaufen der Suspension durch die unterschiedlichen Behandlungszonen verändert sich deren Zusammensetzung bis zur Zielzusammensetzung. Ist die Zielzusammensetzung erreicht, ändert sich diese nicht mehr im Laufe des vorliegenden Verfahrens. Diese Zielzusammensetzung erfüllt vorzugsweise die Formel $c(Cell) \leq 35{,}9-1{,}736*c(H_2O)$, und/oder die Formel $c(Cell) \geq 32{,}4-2{,}17*c(H_2O)$. Wobei die c(Cell) der Anteil in Massenprozent der Cellulose und $c(H_2O)$ der Anteil in Massenprozent des Wassers in der Celluloselösung darstellen. Die Ausgangszusammensetzung wird durch Mischen der einzelnen Komponenten erreicht, während die Zielzusammensetzung während dem Durchlaufen des vorliegenden Verfahrens erreicht wird. Da sich die Zusammensetzung durch die vorliegenden physikalischen Bedingungen in den einzelnen Zonen unterschiedlich ausbildet, ist es von Vorteil, wenn die im erfindungsgemäßem Verfahren beschriebenen Parameter und -bereiche eingehalten werden. Erfahrungsgemäß folgt die anzustrebende Zielzusammensetzung der Gleichung $c(H2O) = (33{,}5-c(Cell)/1{,}91$. Die Zielzusammensetzung kann von der anzustrebenden Zielzusammensetzung variieren, sollte aber vorzugsweise in den Bereichen der oben angegebenen Formeln für die Zielzusammensetzung liegen. Die Zielzusammensetzung wird am Ende der Auslasszone bestimmt. Während der Behandlung kann die Zielzusammensetzung unterschiedlich rasch erreicht werden. So ist es vorteilhaft für das vorliegende Verfahren, wenn diese Zielzusammensetzung am Ende der Prozesszone erreicht wird. Genauso denkbar wäre aber auch, dass die Zielzusammensetzung bereits nach einem Drittel der gesamten Behandlungszeit erreicht wird. Die gesamte Behandlungszeit ist jene Zeitspanne, welche von der Suspension/Lösung benötigt wird, um vom Anfang der Eintrittszone zum Ende der Auslasszone zu gelangen. Nach Erreichen der Zielzusammensetzung ändert sich die Zusammensetzung der Celluloselösung nicht mehr.

In diesem horizontal ausgeführten Dünnschichtverdampfer konnte durch intensive Misch- und Knetwirkung die Celluloselösung partikelfrei kontinuierlich hergestellt werden. Behandlungszeiten (t) von 150 Sekunden führten zur vollständigen Auflösung der Cellulose.

Die geometrischen Verhältnisse der Gehäusemantelinnenfläche bezogen auf die Fläche der Rotorblattspitze (wie oben) und auf die Umfangsgeschwindigkeit der Rotorblattspitze (i.e. beim größten Abstand von der Achse) zeigte eine effektive Kennzahl zur Beurteilung einer wirtschaftlich sinnvollen und gleichzeitig effizienten Auflösung der eingetragenen Suspension. Bei den folgenden Werten dieses Parameters kann ein wirtschaftliches Verfahren bei gleichzeitig sehr guter Lösungsqualität durchgeführt werden. Dieser Parameter wird hier als spezifisches Flächenverhältnis der Rotorblätter (Tabelle, Zeile ae) definiert:

Spez. Flächenverhältnis d. Rotorblätter (Tabelle, Zeile ae) = Wärmeaustauschfläche der Innenwand des Gehäusemantels (Tabelle, Zeile h) / (Rotorspitzenblatt Belastungsfläche (Tabelle, Zeile ad) * Blattspitzengeschwindigkeit (Tabelle, Zeile l)

Es hat sich gezeigt, dass für eine gute Qualität, d.h. Note <2 der spinnfertigen Lösung (Tabelle, Zeile x) das spez. Flächenverhältnis der Rotorblätter bevorzugt unter 10, besonders bevorzugt unter 8 und ganz besonders bevorzugt unter 5 $m^2s/m^3$ liegt. Diese Parameterbereiche sind somit besonders bevorzugt.

Zur sicheren Prozessführung wurden der Suspension noch weitere Stabilisatoren zur Stabilisierung des Lösungsmittels und zur Verhinderung des Celluloseabbaus zugesetzt. Die kontinuierlich hergestellte Suspension wurde unter Anlegen von Temperatur (u, v, w) und Unterdruck (j), sowie unter horizontaler Scherung in eine hoch viskoelastische Lösung übergeführt, wobei die Entfernung von überschüssigem Wasser bei reduziertem Druck (j) zwischen 45 und 90 mbara erfolgte. Die Beheizung der Vorrichtung wurde mittels gesättigten Wasserdampfs bei einem Druck von 1-2 bara durchgeführt, wobei die Dampftemperatur zwischen 100°C und 121°C war.

Die Dicke der über den Innenraum ausgebreiteten Schicht betrug zwischen 2,75 und 3,5 mm (i). Durch Temperatur und Unterdruck verdampftes Wasser wurde im Gegenstrom zum Suspensionstrom mit einer Temperatur von 80-85 °C abgezogen, wobei der Dampfstrom (s) bis zu 61,5 kg/h betrug. Die Scherrate (o) betrug zwischen 5000 und 21000 $s^{-1}$, wobei der Rotor bei der Drehzahl € eine elektrische Leistung (f) von -0 - 37 kW aufnahm.

Am Auslass wurde mit einer Austragsschnecke die fertige Celluloselösung ausgetragen (k). Die Austragsschnecke wurde für den Übergang vom im Innenraum herrschenden Unterdruck zum Umgebungsdruck eingesetzt. Es konnten pro Stunde bis zu 484 kg homogene Celluloselösung mit einer Temperatur (w) von ca. 100 °C erhalten werden. Die Behandlungszeit (t) der Suspension in der horizontalen Vorrichtung lag bei -0 - 360 Sekunden.

Die so erhaltene hochviskose Celluloselösung wurde vor dem Verspinnen den zusätzlichen Prozessschritten der Entgasung- und Filtration unterzogen. Durch die mikroskopische Untersuchung der Lösung wurde festgestellt, dass nur bei den Beispielen 5 und 6 ungelöste Cellulose-Partikel in der Lösung vorhanden waren. Hierzu dient die Benotung der spinnfertigen Lösung (x) nach folgendem System: Die Benotung erfolgt unter einem Mikroskop mit der Notengebung von 1 bis 3. Note 1 bedeutet, dass keine ungelösten Partikel mehr vorhanden sind. Note 2 bedeutet, dass wenige ungelöste Partikel vorhanden und Note 3 bedeutet, dass viele ungelöste Partikel vorhanden sind. Nach Filtration sind alle Cellulose-Lösungen zum Verspinnen geeignet.

Das Verspinnen der Celluloselösung zu Filamenten erfolgte wie in der WO 2013/030399 A beschrieben und umfasst ein Extrudieren der Lösung durch eine oder mehrere Extrusionsöffnungen unter Druck und Verfestigen der Zelluloseformkörper in einem Auffangbad, wobei die Lösung zwischen den Extrusionsöffnungen und dem Auffangbad durch einen Luftspalt geführt wird.

**Kennzahlen:**

**Reynolds-Zahl Rotor (y):**

$$Re_{rot} = \frac{\rho.v.d_{rot}}{\eta}$$

$Re_{rot}$ = Reynolds-Zahl des Rotors [-]
$\rho$ = mittlere Dichte der Suspension [kg/m$^3$]
$v$ = Umfangsgeschwindigkeit der Rotorblattspitzen [m/s]
$d_{rot}$ = Durchmesser des Rotors [m]
$\eta$ = dynamische Viskosität der Spinnfertigen Lösung [Pas]

**Reynolds-Zahl Film (z) :**

$$Re_{film} = \frac{\dot{m}}{D_i.\pi.\eta}$$

$Re_{film}$ = Reynolds-Zahl des Dünnschichtfilms [-]
$m$ = Massenstrom der zugeführten Suspension [kg/s]
$D_i$ = Durchmesser des beheizten Zylinders [m]

**Newton-Zahl (aa):**

$$Ne = \frac{P}{\rho.n^3.d_{rot}^4.l}$$

$Ne$ = Newton-Zahl [-]
$n$ = Drehzahl des Rotos [1/s]
$l$ = Länge des Rotos [m]
$P$ = Leistungsaufnahme des Rotors

**Eulerzahl (ab):**

$$Eu = 1,372.Re_{rot}^{-0,15}.Re_{film}^{0,379}.i^{-0,445}$$

*Eu*= Euler - Zahl

*i*= Anzahl der Rotorblätter

**Druckberechnung im Reaktor**

$$p = 122. \, e^{-0,05c(Cell)}$$

p = absoluter Druck im Reaktor in mbar.

c(Cell) = Cellulosekonzentration in der Suspension in Massenprozent

**Spez. Flächenverhältnis der Rotorblätter (Streichelemente):**

$$A_R = \frac{A_M}{A_B * v_u}$$

$A_R$      spezifische Flächenverhältnis der Rotorblätter in $m^2 s/m^3$

$A_M$      Mantelinnenfläche der Prozesszone in $m^2$

$A_B$      Rotorspitzenblatt Belastungsfläche in $m^2$

$V_u$      Blattspitzenumfangsgeschwindigkeit in m/s

Tabelle 1

| | Einheit | Buchstabe | 1 | 2 | 3 | 4 | 5 | 6 | 7 | 8 | 9 | 10 | 11 | 12 |
|---|---|---|---|---|---|---|---|---|---|---|---|---|---|---|
| Suspension Fördermenge | [kg/h] | a | 100 | 100 | 100 | 100 | 300 | 300 | 300 | 300 | 500 | 500 | 500 | 500 |
| Konz. NMMNO | [Masse-%] | b | 75,3 | 69,7 | 64,7 | 58 | 75,3 | 69,7 | 64,7 | 58 | 75,3 | 69,7 | 64,7 | 58 |
| Konz. H2O | [Masse-%] | c | 19 | 21,3 | 23,4 | 26,1 | 19 | 21,3 | 23,4 | 26,1 | 19 | 21,3 | 23,4 | 26,1 |
| Konz. Cell | [Masse-%] | d | 5,7 | 9 | 11,9 | 15,9 | 5,7 | 9 | 11,9 | 15,9 | 5,7 | 9 | 11,9 | 15,9 |
| Drehzahl | [1/min] | e | 118 | 177 | 236 | 236 | 355 | 414 | 473 | 473 | 532 | 532 | 591 | 650 |
| Leistungsaufnahme | [kW] | f | 7,4 | 9,25 | 11,1 | 18,5 | 14,8 | 14,8 | 18,5 | 22,2 | 14,8 | 14,8 | 22,2 | 33,3 |
| Innendurchmesser Gehäuseinnenraum | [mm] | g | 280 | 280 | 280 | 280 | 280 | 280 | 280 | 280 | 280 | 280 | 280 | 280 |
| Wärmeaustauschfläche der Innenwand | [m²] | h | 0,55 | 0,55 | 0,55 | 0,55 | 0,55 | 0,55 | 0,55 | 0,55 | 0,55 | 0,55 | 0,55 | 0,55 |
| Schichtdicke der Suspension | [mm] | i | 2,75 | 2,75 | 2,75 | 2,75 | 2,75 | 2,75 | 2,75 | 2,75 | 3,5 | 3,5 | 3,5 | 3,5 |
| Druck während Reaktionsführung | [mbar] | j | 90 | 75 | 60 | 45 | 90 | 75 | 60 | 45 | 90 | 75 | 60 | 45 |
| Lösungsaustrag | [kg/h] | k | 95 | 90 | 85 | 80 | 289 | 280 | 271 | 259 | 484 | 469 | 456 | 439 |
| Blattspitzengeschwindigkeit | [m/s] | l | 1,70 | 2,55 | 3,40 | 3,40 | 5,10 | 5,95 | 6,79 | 6,79 | 7,60 | 7,60 | 8,45 | 9,29 |

Beispiel Nummer

(fortgesetzt)

| Tabelle 1 | | | Beispiel Nummer | | | | | | | | | | | |
|---|---|---|---|---|---|---|---|---|---|---|---|---|---|---|
| | Einheit | Buchstabe | 1 | 2 | 3 | 4 | 5 | 6 | 7 | 8 | 9 | 10 | 11 | 12 |
| Blattspitzen-abstand | [mm] | m | 108 | 108 | 108 | 108 | 216 | 216 | 216 | 216 | 214 | 214 | 214 | 214 |
| Blattfolgefrequenz | [1/min] | n | 945 | 1418 | 1891 | 1891 | 1418 | 1655 | 1891 | 1891 | 2127 | 2127 | 2364 | 2600 |
| Scherge-schwindig-keit in Proz-esszone | [1/s] | o | 4941 | 7412 | 9883 | 9883 | 14824 | 17295 | 19766 | 19766 | 17376 | 17376 | 19307 | 2123 7 |
| Förder-menge Sus-pension / St-reichelement | kg/h | p | 1,61 | 1,61 | 1,61 | 1,61 | 7,89 | 7,89 | 7,89 | 7,89 | 13,16 | 13,16 | 13,16 | 13,16 |
| Wärmeaus-tauschfläche / Streichele-ment | $dm^2$/Blatt | q | 0,880 | 0,880 | 0,880 | 0,880 | 1,435 | 1,435 | 1,435 | 1,435 | 1,435 | 1,435 | 1,435 | 1,435 |
| kg/h pro $m^2$ Quer-schnitts-fläche | [kg/h$m^2$] | r | 4987 | 4987 | 4987 | 4987 | 23939 | 23939 | 23939 | 23939 | 39898 | 39898 | 39898 | 3989 8 |
| Wasserdampfstrom | [kg/h] | s | 5,3 | 10,2 | 14,7 | 20,5 | 10,7 | 20,5 | 29,3 | 41 | 16 | 30,7 | 44 | 61,5 |
| Behandlungszeit | [s] | t | 225 | 427 | 650 | 912 | 53 | 100 | 153 | 279 | 188 | 231 | 275 | 325 |
| Temp. Einlasszone | [°C] | u | 80 | 80 | 80 | 80 | 80 | 80 | 80 | 80 | 80 | 80 | 80 | 80 |
| Temp. Prozesszone | [°C] | v | 100 | 103 | 103 | 110 | 100 | 103 | 103 | 110 | 100 | 103 | 103 | 110 |
| Temp. Auslasszone | [°C] | w | 95 | 99 | 100 | 105 | 98 | 101 | 101 | 106 | 99 | 102 | 102 | 107 |

(fortgesetzt)

| Tabelle 1 | | | Beispiel Nummer | | | | | | | | | | | |
|---|---|---|---|---|---|---|---|---|---|---|---|---|---|---|
| | Einheit | Buchstabe | 1 | 2 | 3 | 4 | 5 | 6 | 7 | 8 | 9 | 10 | 11 | 12 |
| Note der Spinnfertigen Lösung | [-] | x | 1 | 1 | 1 | 1 | 2 | 2 | 1 | 2 | 1-2 | 2 | 2-3 | 2 |
| Reynolds-Zahl des Rotors | [-] | y | 0,11 | 0,10 | 0,07 | 0,04 | 0,34 | 0,24 | 0,15 | 0,07 | 0,50 | 0,31 | 0,18 | 0,10 |
| Reynolds-Zahl des Films | [-] | z | 6,32 E-06 | 3,95 E-06 | 2,11 E-06 | 1,05 E-06 | 1,89 E-05 | 1,18 E-05 | 6,32 E-06 | 3,16 E-06 | 3,16 E-05 | 1,97 E-05 | 1,05 E-05 | 5,26 E-06 |
| Newton-Zahl | [-] | aa | 229 | 85 | 43 | 72 | 17 | 11 | 9 | 11 | 5 | 5 | 6 | 6 |
| Eul-r-Zahl | [-] | ab | 2,60 E-03 | 2,75 E-03 | 2,28 E-03 | 1,94 E-03 | 4,18 E-03 | 4,56 E-03 | 3,87 E-03 | 3,30 E-03 | 5,94 E-03 | 5,34 E-03 | 4,55 E-03 | 3,83 E-03 |
| Austrag am Auslass pro $m^2$ Wärmetauschfläche | kg/h/m2 | ac | 173,6 | 164,7 | 156,4 | 145,8 | 530,5 | 512,5 | 496,4 | 474,9 | 887,5 | 860,5 | 836,1 | 804,0 |
| Rotorspitzenblatt Belastungsfläche | $[m^2]$ | ad | 0,02005 | 0,02005 | 0,02005 | 0,02005 | 0,01253 | 0,01253 | 0,0125 3 | 0,0125 3 | 0,01253 | 0,0125 3 | 0,0125 3 | 0,012 53 |
| Spez. Flächenverhältnis der Rotorblätter | $[m^2s/m^3]$ | ae | 16,0129 | 10,6752 | 8,00646 | 8,00646 | 8,54023 | 7,32019 | 6,4051 7 | 6,4051 7 | 5,72477 | 5,7247 7 | 5,1522 9 | 4,683 90 |
| Eingriffsspitzenleistung | kg/sm2 | af | 1,31 | 1,24 | 1,18 | 1,10 | 6,41 | 6,20 | 6,00 | 5,74 | 10,73 | 10,40 | 10,11 | 9,72 |

**Bezugszeichenliste**

| | |
|---|---|
| 10 | Dünnschichtbehandlungsvorrichtung |
| 12 | Prozessgehäuse |
| 14 | Gehäusemantel |
| 15 | Gehäusemantelinnenfläche |
| 16; 160 | Gehäuseinnenraum; Materialbehandlungsraum |
| 18 | Einlasszone |
| 20 | Einlassstutzen |
| 22 | Auslasszone |
| 24 | Auslassstutzen |
| 25 | Prozesszone |
| 26 | Festlager |
| 28 | Loslager |
| 30; 300 | Austragssystem; Austragsdoppelschnecke |
| 32 | erster Wärmeträgereintritt |
| 34 | erster Wärmeträgeraustritt |
| 36 | zweiter Wärmeträgereintritt |
| 38 | zweiter Wärmeträgeraustritt |
| 40 | Brüdenstutzen |
| 42 | Rotor |
| 43 | Streichelemente |
| 431, 432 | Verteilelemente, Förderelemente |
| 44 | Rotorwelle |
| 48; 480 | Antrieb; Stirnradgetriebemotor |
| 50 | Rotorwellenkörper |
| 52 | Schaft |
| 54 | Befestigungsleisten |
| 56; 560 | Auftriebselement; Stegblech |
| 58 | Dachfirst des Stegblechs |
| 60a, b | erste und zweite Stegblechfläche |
| 62 | Anströmungsabschnitt |
| 64 | vorlaufendes Ende des Anströmungsabschnitts |
| 66 | nachlaufender Bereich des Anströmungsabschnitts |
| 68 | Spalt |
| 70 | Förderrippe |
| 72 | axial verlaufende Scherkante des Stegblechs |
| 74 | Verbindungsbleche |
| 76 | Schutzmantel |
| 77 | Hülse |
| 78 | Zähne mit Anstellwinkel |
| 79 | Zähne ohne Anstellwinkel |
| 80 | Streichblatt |
| 82 | Kanal |
| 84 | Innenraum des Schutzmantels |
| 86, 86' | Trichter |
| 88 | Austragswelle |
| 90, 90' | sich verjüngender Trichterabschnitt |
| 92 | zylindrischer Trichterabschnitt |
| 94 | Trichteröffnung |
| 96 | Austragspumpe |
| 98 | erster Austragswellenabschnitt |
| 99 | zweiter Austragswellenabschnitt |
| 100 | Austragsmonoschnecke |
| 102 | distales Drehlager |
| 104 | Austragswellenantrieb |

| 106 | Räumer |
|---|---|
| 108 | distale Stirnseite des Prozessgehäuses |
| 110 | Abreinigungselement |
| 112 | Räumerbarren |
| 114 | Räumerarm |

**Vorzugsweise Ausführungsformen**

Vorzugsweise wird die Erfindung wie folgt definiert:

1. Dünnschichtbehandlungsvorrichtung zum Behandeln von viskosem Material umfassend

ein zur Horizontalen um maximal 20° geneigt ausgerichtetes Prozessgehäuse (12) mit einem beheizbaren und/oder kühlbaren Gehäusemantel (14), welcher einen sich in axialer Richtung erstreckenden rotationssymmetrischen und einen Materialbehandlungsraum (160) bildenden Gehäuseinnenraum (16) umschliesst, einen in einer Einlasszone (18) des Prozessgehäuses (12) angeordneten Einlassstutzen (20) zum Einführen des zu behandelnden Materials in den Materialbehandlungsraum (160), einen in einer Auslasszone (22) des Prozessgehäuses (12) angeordneten Auslassstutzen (24) zum Austragen des behandelten Materials aus dem Materialbehandlungsraum (160), und eine im Materialbehandlungsraum (160) angeordnete und sich koaxial erstreckende, antreibbare Rotorwelle (44) zur Erzeugung eines Materialfilms auf der Gehäusemantelinnenfläche (15) und zur Förderung des Materials in Richtung von der Einlasszone (18) über eine Prozesszone (25) zu einer Auslasszone (22) hin, wobei die Rotorwelle (44) einen zentralen Rotorwellenkörper (50) und auf dessen Umfang angeordnete Streichelemente (43) umfasst, deren radial äusserstes Ende von der Gehäusemantelinnenfläche (15) beabstandet ist, dadurch gekennzeichnet, dass die Rotorwelle (44) mindestens ein auf dem Rotorwellenkörper (50) angeordnetes Auftriebselement (56) umfasst, welches derart ausgestaltet ist, um während der Rotation der Rotorwelle (44) eine Auftriebskraft in Richtung zum Rotorwellenkörper (50) hin zu erzeugen.

2. Dünnschichtbehandlungsvorrichtung gemäss 1, dadurch gekennzeichnet, dass das Auftriebselement (56) einen flächigen Anströmungsabschnitt (62) mit einem in Rotationsrichtung vorlaufenden Ende (64) aufweist, welches in grösserem Abstand von der Gehäusemantelinnenfläche (15) angeordnet ist als ein dem vorlaufenden Ende nachlaufender Bereich (66) des Anströmungsabschnitts (62), wodurch zwischen dem Anströmungsabschnitt (62) und der Gehäusemantelinnenfläche (15) ein sich in Gegenrichtung zur Rotationsrichtung verengender Spalt (68) ausgebildet wird, insbesondere ein sich kontinuierlich verengender Spalt.

3. Dünnschichtbehandlungsvorrichtung gemäss 2, dadurch gekennzeichnet, dass der Anströmungsabschnitt (62) einen Winkelbereich $\beta_1$ von mindestens 10° des Umfangs des Rotorwellenkörpers (50) abdeckt.

4. Dünnschichtbehandlungsvorrichtung gemäss 1 bis 3, dadurch gekennzeichnet, dass mindestens ein Teil der Auftriebselemente (56) von jeweils einem Streichelement (43) gebildet wird.

5. Dünnschichtbehandlungsvorrichtung gemäss 1 bis 4, dadurch gekennzeichnet, dass das Auftriebselement (56) ein wenigstens annähernd giebeldachförmiges Stegblech (560) umfasst, dessen Dachfirst (58) wenigstens annähernd parallel zur Achsrichtung der Rotorwelle (44) verläuft.

6. Dünnschichtbehandlungsvorrichtung gemäss 1 bis 5, dadurch gekennzeichnet, dass das Auftriebselement (56), insbesondere das Stegblech (560), auf seiner radialen Aussenseite mindestens eine helikal verlaufende Förderrippe (70) aufweist.

7. Dünnschichtbehandlungsvorrichtung gemäss 1 bis 6, dadurch gekennzeichnet, dass mindestens ein Teil der Auftriebselemente (56) in einem Bereich angeordnet ist, welcher mittig zwischen den Drehlagern liegt, auf welchen die Rotorwelle (44) gelagert ist, vorzugsweise in der Prozesszone (25).

8. Dünnschichtbehandlungsvorrichtung gemäss 1 bis 7, dadurch gekennzeichnet, dass mindestens ein Teil der Auftriebselemente (56) in der Prozesszone (25) helikal versetzt zueinander auf dem Rotorwellenkörper (50) angeordnet sind.

9. Dünnschichtbehandlungsvorrichtung gemäss 1 bis 8, dadurch gekennzeichnet, dass in der Einlasszone (18) ein zwischen der Gehäusemantelinnenfläche (15) und dem Rotorwellenkörper (50) angeordneter, den Rotorwellenkörper mindestens annähernd vollständig umgebender konzentrischer Schutzmantel (76) ausgebildet ist.

10. Dünnschichtbehandlungsvorrichtung gemäss 9, dadurch gekennzeichnet, dass der Schutzmantel (76) mindestens teilweise durch mehrere in Umfangsrichtung verteilte Auftriebselemente (56), insbesondere Stegbleche (560), gebildet wird.

11. Dünnschichtbehandlungsvorrichtung gemäss 10, dadurch gekennzeichnet, dass zwischen jeweils zwei in Umfangsrichtung aufeinanderfolgenden Auftriebselementen (56), insbesondere Stegblechen (560), ein radial zurückversetzter Kanal (82) ausgebildet ist.

12. Dünnschichtbehandlungsvorrichtung gemäss 1 bis 11, dadurch gekennzeichnet, dass die Prozesszone (25) eine Distributionszone und eine in Förderrichtung stromabwärts angeordnete Förderzone aufweist, wobei das Verhältnis der Anzahl Förderelemente (432) zur Anzahl Verteilelemente (431) in der Förderzone höher ist als in der Distributionszone.

13. Dünnschichtbehandlungsvorrichtung nach 1 bis 12, dadurch gekennzeichnet, dass der Auslassstutzen (24) in ein Austragssystem (30) in Form einer Austragsmonoschnecke oder einer Austragsdoppelschnecke (300) mündet, vorzugweise mit Achsrichtung quer zur Achsrichtung des Prozessgehäuses (12).

14. Dünnschichtbehandlungsvorrichtung gemäss 1 bis 13, dadurch gekennzeichnet, dass sie zudem eine Reinigungsvorrichtung umfasst, welche derart ausgestaltet ist, dass sie bei geöffnetem Enddeckel in das Prozessgehäuse (12) einführbar und in Achsrichtung hin und her bewegbar ist.

15. Dünnschichtbehandlungsvorrichtung nach 1 bis 14, dadurch gekennzeichnet, dass sie zur thermischen Auftrennung eines Stoffgemischs ausgelegt ist, und insbesondere in Form eines Dünnschichtverdampfers, eines Dünnschichttrockners oder eines Dünnschichtreaktors vorliegt, vorzugsweise in Form eines Dünnschichtverdampfers.

16. Verwendung einer Dünnschichtbehandlungsvorrichtung nach 1 bis 15 zur Behandlung eines Materials mit einer während der Behandlung mindestens temporär vorliegenden Viskosität von 100 Pa·s oder mehr.

17. Verfahren zur Herstellung einer Lösung von Cellulose mit einem Lösungsmittel aus einer Suspension von Cellulose in dem Lösungsmittel und einem flüchtigen Nicht-Lösungsmittel umfassend das Einbringen der Suspension in einen Einlass einer Dünnschichtbehandlungsvorrichtung, filmartiges Aufbringen und Verteilen der Suspension an einem mit einem Wärmetauscher temperierten Gehäusemantel durch um eine gemeinsame Achse rotierende Streichelemente in einem Prozessgehäuse der Dünnschichtbehandlungsvorrichtung, Verdampfen von flüchtigem Nicht-Lösungsmittel, sodass die Cellulose gelöst wird, und Ausbringen der Lösung von Cellulose aus der Dünnschichtbehandlungsvorrichtung durch einen Auslass.

18. Verfahren nach 17, dadurch gekennzeichnet, dass zumindest ein Teil der Streichelemente einen Vortrieb der Cellulose in Richtung des Auslasses bewirken, sodass der Austrag am Auslass zwischen 300 und 600 kg/h , bevorzugt zwischen 350 und 550 kg/h und besonders bevorzugt zwischen 380 und 480 kg/h Cellulose-Lösung pro $m^2$ der temperierten Oberfläche des Gehäusemantels ist.

19. Verfahren nach 17 oder 18, dadurch gekennzeichnet, dass die Temperatur der eingetragenen Suspension in der Prozesszone zwischen 100 und 125°C, bevorzugt zwischen 100 und 110°C und besonders bevorzugt zwischen 100 und 105°C betraegt.

20. Verfahren nach 17 bis 19, dadurch gekennzeichnet, dass der absolute Druck in der Prozesszone zumindest im Bereich von +-10%, bevorzugt +/-5%, der Formel p = 122*e^-0.05c(Cell)) ist, wobei p der absolute Druck in mbar und c(Cell) die Cellulosekonzentration in der Suspension in Massenprozent sind.

21. Verfahren nach 17 bis 20, dadurch gekennzeichnet, dass das spezifische Flächenverhältnis der Rotorblätter (Tabelle, ae) unter 10 $m^2s/m^3$, besonders bevorzugt unter 8 $m^2s/m^3$, und ganz besonders bevorzugt unter 5 $m^2s/m^3$, liegt.

22. Verfahren nach 17 bis 21, dadurch gekennzeichnet, dass die Rotorspitzenblatt Belastungsfläche (Tabelle, ad) in einem Bereich von 0,02 $m^2$ bis 6 $m^2$, bevorzugt in einem Bereich von 2 $m^2$ -6 $m^2$ und besonders bevorzugt in einem Bereich von 4 m$^2$-6 m$^2$ liegt.

23. Verfahren gemäß 17 bis 22,

a) dadurch gekennzeichnet, dass die spezifische Belastung in der Einlasszone 80 kg/h/dm$^3$ - 380 kg/h/dm$^3$, bevorzugt 120 kg/h/dm$^3$ - 370 kg/h/dm$^3$, und besonders bevorzugt 150 kg/h/dm$^3$ - 350 kg/h/dm$^3$, ist;
b) dadurch gekennzeichnet, dass die spezifische Belastung in der Prozesszone 65 kg/h/dm$^3$ - 260 kg/h/dm$^3$, bevorzugt 70 kg/h/dm$^3$ - 200 kg/h/dm$^3$, und besonders bevorzugt 80 kg/h/dm$^3$ - 150 kg/h/dm$^3$ ist;
c) dadurch gekennzeichnet, dass die spezifische Belastung in der in der Auslasszone 2 kg/h/dm$^3$ - 125 kg/h/dm$^3$, bevorzugt 5 kg/h/dm$^3$ - 100 kg/h/dm$^3$ und besonders bevorzugt 10 kg/h/dm$^3$ - 50 kg/h/dm$^3$ ist;
d) dadurch gekennzeichnet, dass die spezifische Belastung in der Nachbearbeitungszone 0 kg/h/dm$^3$ - 500 kg/h/dm$^3$, besonders bevorzugt 0 kg/h/dm$^3$ - 250 kg/h/dm$^3$ ist.

24. Verfahren nach 17-23, dadurch gekennzeichnet, dass die gesamte Behandlungszeit der Celluloselösung mindestens 60 s, vorzugsweise größer als 100 s ist und besonders bevorzugt von 100 bis 1000 s, ist.

25. Verfahren gemäß 17 bis 24, dadurch gekennzeichnet, dass das Verhältnis aus Ausgangszusammensetzung zu Zielzusammensetzung der Formel $\dfrac{c_{H2O,vorher}}{c_{H2O,nachher}} = \dfrac{41,1+1,91 c_{Cell,\ vorher}}{47,9-1,43 c_{Cell,\ nachher}}$ folgt, wobei c (Cell) die Konzentration der Cellulose in der Lösung und c (H2O) die Konzentration von Wasser in der Lösung, jeweils in Massenprozent angegeben, sind.

26. Verfahren nach 17 bis 25,

a) dadurch gekennzeichnet, dass das Verhältnis von $\dfrac{c_{H2O,vorher}}{c_{H2O,nachher}}$ im Bereich von 1,8 bis 2,5, besonders bevorzugt im Bereich von 2,1 - 2,4 liegt;

b) dadurch gekennzeichnet, dass das Verhältnis $\dfrac{c_{Cell,\ vorher}}{c_{Cell,\ nachher}}$ im Bereich von 0,8 bis 0,95, besonders bevorzugt im Bereich von 0,8 - 0,88 liegt.

27. Verfahren nach 17 bis 26, dadurch gekennzeichnet, dass die Eingriffsspitzenleistung im Bereich von 1,1 kg/sm$^2$ - 5,5 kg/sm$^2$, bevorzugt zwischen 1,1 kg/sm$^2$ - 2,8 kg/sm$^2$, und besonders bevorzugt zwischen 1,1 kg/sm$^2$ und 1,4 kg/sm$^2$, ist.

28. Verfahren nach 17 bis 27, dadurch gekennzeichnet, dass die Zielzusammensetzung vorzugsweise nach mindestens 1/3 der gesamten Behandlungszeit, bevorzug nach 2/3 der gesamten Behandlungszeit, besonders bevorzugt am Ende der Prozesszone erreicht wird.

29. Verfahren nach 17 bis 28, dadurch gekennzeichnet, dass die Länge des mit einem Wärmetauscher temperierten Gehäusemantels vom Einlass bis zum Auslass 0,5 m oder mehr, vorzugsweise 1 m bis 20 m beträgt.

30. Verfahren nach 17 bis 29, dadurch gekennzeichnet, dass die Oberfläche des mit einem Wärmetauscher temperierten Gehäusemantels 0,5 m$^2$ bis 150 m$^2$ ist, vorzugsweise 60 m$^2$ bis 125 m$^2$.

31. Verfahren nach 17 bis 30, dadurch gekennzeichnet, dass das radial äußerste Ende der Streichelemente mit einer Geschwindigkeit von 1,5 m/s bis 12,5 m/s durch die Rotation der Streichelemente bewegt wird.

32. Verfahren nach 17 bis 31, dadurch gekennzeichnet, dass Streichelemente in Folge über einen Abschnitt des mit einem Wärmetauscher temperierten Gehäusemantels mit einer Frequenz von 1500 bis 4000 pro min bewegt werden.

33. Verfahren nach 17 bis 32, dadurch gekennzeichnet, dass unmittelbar nachfolgende Streichelemente mit einem Abstand von 100 mm bis 300 mm zwischen den radial äußersten Enden der Streichelemente aufeinander folgen.

34. Verfahren nach 17 bis 33, dadurch gekennzeichnet, dass am Einlass 1,5 kg/h bis 20 kg/h Suspension pro Streichelement eingebracht werden.

35. Verfahren nach 17 bis 34, dadurch gekennzeichnet, dass die Suspension mit einer Filmdicke von 1 mm bis 50 mm, vorzugsweise 2,0 mm bis 15 mm, aufgebracht wird.

36. Verfahren nach 17 bis 35, dadurch gekennzeichnet, dass im Durchschnitt ein Streichelement auf einer Fläche von 0,8 dm$^2$ bis 2 dm$^2$ in Kontakt mit der Suspension oder Lösung ist.

37. Verfahren nach 17 bis 36, dadurch gekennzeichnet, dass die Suspension eine Filmdicke gemäß der Formel $s=(\ln(m_s/60))/x$ hat, wobei s die Filmdicke in mm, $m_s$ der Förderstrom der Suspension und x eine Konstante von 0,45 bis 7, vorzugsweise von 0,5866, ist.

38. Verfahren nach 17 bis 37, dadurch gekennzeichnet, dass pro Stunde 300 kg bis 100000 kg, vorzugsweise 10000 kg bis 50000 kg, Suspension eingebracht werden.

39. Verfahren nach 17 bis 38, dadurch gekennzeichnet, dass die gemeinsame Achse der rotierenden Streichelemente um maximal 20° zur Horizontalen geneigt ist.

40. Verfahren nach 17 bis 39 mit einer Dünnschichtbehandlungsvorrichtung nach einem der Punkte 1 bis 15.

**Patentansprüche**

1. Verfahren zur Herstellung einer Lösung von Cellulose mit einem Lösungsmittel aus einer Suspension von Cellulose in dem Lösungsmittel und einem flüchtigen Nicht-Lösungsmittel umfassend das Einbringen der Suspension in einen Einlass einer Dünnschichtbehandlungsvorrichtung, filmartiges Aufbringen und Verteilen der Suspension an einem mit einem Wärmetauscher temperierten Gehäusemantel durch um eine gemeinsame Achse rotierende Streichelemente in einem Prozessgehäuse der Dünnschichtbehandlungsvorrichtung, Verdampfen von flüchtigem Nicht-Lösungsmittel, sodass die Cellulose gelöst wird, und Ausbringen der Lösung von Cellulose aus der Dünnschichtbehandlungsvorrichtung durch einen Auslass, **dadurch gekennzeichnet, dass** zumindest ein Teil der Streichelemente einen Vortrieb der Cellulose in Richtung des Auslasses bewirken, sodass der Austrag am Auslass zwischen 300 und 600 kg/h Cellulose-Lösung pro m$^2$ der temperierten Oberfläche des Gehäusemantels ist.

2. Verfahren nach Anspruch 1, **dadurch gekennzeichnet, dass** zumindest ein Teil der Streichelemente einen Vortrieb der Cellulose in Richtung des Auslasses bewirken, sodass der Austrag am Auslass zwischen 350 und 550 kg/h, vorzugsweise zwischen 380 und 480 kg/h Cellulose-Lösung, pro m$^2$ der temperierten Oberfläche des Gehäusemantels ist.

3. Verfahren nach Anspruch 1 oder 2, **dadurch gekennzeichnet, dass** die Temperatur der eingetragenen Suspension in der Prozesszone zwischen 100 und 125°C, bevorzugt zwischen 100 und 110°C und besonders bevorzugt zwischen 100 und 105°C betraegt.

4. Verfahren nach einem der Ansprüche 1 bis 3, **dadurch gekennzeichnet, dass** der absolute Druck in der Prozesszone zumindest im Bereich von +-10%, bevorzugt +/-5%, der Formel $p = 122*e^{-0.05c(Cell)}$ ist, wobei p der absolute Druck in mbar und c(Cell) die Cellulosekonzentration in der Suspension in Massenprozent sind.

5. Verfahren nach einem der Ansprüche 1 bis 4, **dadurch gekennzeichnet, dass** das spezifische Flächenverhältnis der Rotorblätter unter 10 m$^2$s/m$^3$, besonders bevorzugt unter 8 m$^2$s/m$^3$, und ganz besonders bevorzugt unter 5 m$^2$s/m$^3$, liegt; und/oder dass die Rotorspitzenblatt Belastungsfläche in einem Bereich von 0,02 m$^2$ bis 6 m$^2$, bevorzugt in einem Bereich von 2 m$^2$ - 6 m$^2$ und besonders bevorzugt in einem Bereich von 4 m$^2$ - 6 m$^2$ liegt.

6. Verfahren gemäß einem der Ansprüche 1 bis 5,

a) **dadurch gekennzeichnet, dass** die spezifische Belastung in der Einlasszone 80 kg/h/dm$^3$ - 380 kg/h/dm$^3$, bevorzugt 120 kg/h/dm$^3$ - 370 kg/h/dm$^3$, und besonders bevorzugt 150 kg/h/dm$^3$ - 350 kg/h/dm$^3$, ist;
b) **dadurch gekennzeichnet, dass** die spezifische Belastung in der Prozesszone 65 kg/h/dm$^3$ - 260 kg/h/dm$^3$, bevorzugt 70 kg/h/dm$^3$ - 200 kg/h/dm$^3$, und besonders bevorzugt 80 kg/h/dm$^3$ - 150 kg/h/dm$^3$ ist;
c) **dadurch gekennzeichnet, dass** die spezifische Belastung in der in der Auslasszone 2 kg/h/dm$^3$ - 125 kg/h/dm$^3$, bevorzugt 5 kg/h/dm$^3$ - 100 kg/h/dm$^3$ und besonders bevorzugt 10 kg/h/dm$^3$ - 50 kg/h/dm$^3$ ist;
d) **dadurch gekennzeichnet, dass** die spezifische Belastung in der Nachbearbeitungszone 0 kg/h/dm$^3$ - 500

kg/h/dm$^3$, besonders bevorzugt 0 kg/h/dm$^3$ - 250 kg/h/dm$^3$ ist.

7. Verfahren nach einem der Ansprüche 1-6, **dadurch gekennzeichnet, dass** die gesamte Behandlungszeit der Celluloselösung mindestens 60 s, vorzugsweise größer als 100 s ist und besonders bevorzugt von 100 bis 1000 s, ist.

8. Verfahren gemäß einem der Ansprüche 1 bis 7, **dadurch gekennzeichnet, dass** das Verhältnis aus Ausgangszu-

$$\frac{c_{H2O,vorher}}{c_{H2O,nachher}} = \frac{41,1+1,91c_{Cell,\ vorher}}{47,9-1,43c_{Cell,\ nachher}}$$

sammensetzung zu Zielzusammensetzung der Formel folgt, wobei c (Cell) die Konzentration der Cellulose in der Lösung und c (H2O) die Konzentration von Wasser in der Lösung, jeweils in Massenprozent angegeben, sind; und/oder

dass das Verhältnis von $\dfrac{c_{H2O,vorher}}{c_{H2O,nachher}}$ im Bereich von 1, 8 bis 2,5, besonders bevorzugt im Bereich von 2,1 - 2,4 liegt; und/oder dass das Verhältnis $\dfrac{c_{Cell,\ vorher}}{c_{Cell,\ nachher}}$ im Bereich von 0,8 bis 0,95, besonders bevorzugt im Bereich von 0,8 - 0,88 liegt.

9. Verfahren nach einem der Ansprüche 1 bis 8, **dadurch gekennzeichnet, dass** die Eingriffsspitzenleistung im Bereich von 1,1 kg/sm$^2$ - 5,5 kg/sm$^2$, bevorzugt zwischen 1,1 kg/sm$^2$ - 2,8 kg/sm$^2$, und besonders bevorzugt zwischen 1,1 kg/sm$^2$ und 1,4 kg/sm$^2$, ist.

10. Verfahren nach einem der Ansprüche 1 bis 9, **dadurch gekennzeichnet, dass** die Zielzusammensetzung vorzugsweise nach mindestens 1/3 der gesamten Behandlungszeit, bevorzugt nach 2/3 der gesamten Behandlungszeit, besonders bevorzugt am Ende der Prozesszone erreicht wird.

11. Verfahren nach einem der Ansprüche 1 bis 10, **dadurch gekennzeichnet, dass** die Länge des mit einem Wärmetauscher temperierten Gehäusemantels vom Einlass bis zum Auslass 0,5 m oder mehr, vorzugsweise 1 m bis 20 m beträgt; und/oder dass die Oberfläche des mit einem Wärmetauscher temperierten Gehäusemantels 0,5 m$^2$ bis 150 m$^2$ ist, vorzugsweise 60 m$^2$ bis 125 m$^2$.

12. Verfahren nach einem der Ansprüche 1 bis 11, **dadurch gekennzeichnet, dass** das radial äußerste Ende der Streichelemente mit einer Geschwindigkeit von 1,5 m/s bis 12,5 m/s durch die Rotation der Streichelemente bewegt wird; und/oder dass Streichelemente in Folge über einen Abschnitt des mit einem Wärmetauscher temperierten Gehäusemantels mit einer Frequenz von 1500 bis 4000 pro min bewegt werden; und/oder dass unmittelbar nachfolgende Streichelemente mit einem Abstand von 100 mm bis 300 mm zwischen den radial äußersten Enden der Streichelemente aufeinander folgen; und/oder dass am Einlass 1,5 kg/h bis 20 kg/h Suspension pro Streichelement eingebracht werden; und/oder dass im Durchschnitt ein Streichelement auf einer Fläche von 0,8 dm$^2$ bis 2 dm$^2$ in Kontakt mit der Suspension oder Lösung ist.

13. Verfahren nach einem der Ansprüche 1 bis 12, **dadurch gekennzeichnet, dass** die Suspension mit einer Filmdicke von 1 mm bis 50 mm, vorzugsweise 2,0 mm bis 15 mm, aufgebracht wird; und/oder dass die Suspension eine Filmdicke gemäß der Formel s=(ln(m$_s$/60))/x hat, wobei s die Filmdicke in mm, m$_s$ der Förderstrom der Suspension und x eine Konstante von 0,45 bis 7, vorzugsweise von 0,5866, ist.

14. Verfahren nach einem der Ansprüche 1 bis 13, **dadurch gekennzeichnet, dass** pro Stunde 300 kg bis 100000 kg, vorzugsweise 10000 kg bis 50000 kg, Suspension eingebracht werden.

15. Verfahren nach einem der Ansprüche 1 bis 14, **dadurch gekennzeichnet, dass** die gemeinsame Achse der rotierenden Streichelemente um maximal 20° zur Horizontalen geneigt ist.

Fig. 1

48,480

10

40 32

16,160
12 14 38

30,300
36

42

24

26 20 28 34

18 25 22

30

EP 4 079 385 A1

Fig. 2

EP 4 079 385 A1

30

40

12

14

A

16,160

20

A

Fig. 3

Fig. 4

Fig. 5

560
560
78
80
79
43,432
43,431
44
60b
60a,62
74
56,560
76
70
58,72
54
50
52

Fig. 6

Fig. 7

Fig. 8

Fig. 9

Fig. 10

Fig. 11

Europäisches
Patentamt

European
Patent Office

Office européen
des brevets

# EUROPÄISCHER RECHERCHENBERICHT

**Nummer der Anmeldung**

**EP 22 17 8959**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 656 224 A (ZIKELI STEFAN [AT] ET AL) 12. August 1997 (1997-08-12) * Spalte 3, Zeile 66 - Spalte 5, Zeile 11; Abbildung 1 * ----- | 1-15 | INV. B01D1/00 B01D1/22 |
| X | US 5 888 288 A (QUIGLEY MICHAEL [GB] ET AL) 30. März 1999 (1999-03-30) * Spalte 4, Zeile 24 - Spalte 7, Zeile 25; Abbildung 1 * ----- | 1-15 | |
| X,D | WO 94/06530 A1 (COURTAULDS FIBRES LTD [GB]) 31. März 1994 (1994-03-31) * Seite 6, Zeile 19 - Seite 17, Zeile 17; Abbildungen 1-2 * ----- | 1-15 | |

**RECHERCHIERTE SACHGEBIETE (IPC)**

B01D

Der vorliegende Recherchenbericht wurde für alle Patentansprüche erstellt

| Recherchenort | Abschlußdatum der Recherche | Prüfer |
|---|---|---|
| Den Haag | 15. September 2022 | Thibault, Valerie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 17 8959

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-09-2022

| Im Recherchenbericht angeführtes Patentdokument | Datum der Veröffentlichung | Mitglied(er) der Patentfamilie | | Datum der Veröffentlichung |
|---|---|---|---|---|
| US 5656224 A | 12-08-1997 | AT | 158592 T | 15-10-1997 |
| | | AT | 402410 B | 26-05-1997 |
| | | AU | 696653 B2 | 17-09-1998 |
| | | BR | 9508059 A | 18-11-1997 |
| | | CA | 2192443 A1 | 24-10-1996 |
| | | CN | 1151169 A | 04-06-1997 |
| | | EP | 0759038 A1 | 26-02-1997 |
| | | ES | 2107919 T3 | 01-12-1997 |
| | | FI | 965075 A | 17-12-1996 |
| | | GB | 2303134 A | 12-02-1997 |
| | | GR | 3024947 T3 | 30-01-1998 |
| | | HK | 1001496 A1 | 19-06-1998 |
| | | HU | 218267 B | 28-06-2000 |
| | | JP | H10502125 A | 24-02-1998 |
| | | KR | 100371914 B1 | 10-07-2003 |
| | | MY | 113593 A | 30-04-2002 |
| | | PL | 317711 A1 | 28-04-1997 |
| | | RO | 117260 B1 | 28-12-2001 |
| | | SI | 0759038 T1 | 28-02-1998 |
| | | SK | 160796 A3 | 09-07-1997 |
| | | TR | 199600279 A2 | 21-01-1997 |
| | | TW | 343199 B | 21-10-1998 |
| | | US | 5656224 A | 12-08-1997 |
| | | WO | 9633221 A1 | 24-10-1996 |
| | | ZA | 962937 B | 17-10-1996 |
| US 5888288 A | 30-03-1999 | AT | 170876 T | 15-09-1998 |
| | | AU | 4351396 A | 31-07-1996 |
| | | BR | 9606732 A | 13-01-1998 |
| | | CA | 2209567 A1 | 18-07-1996 |
| | | CN | 1172487 A | 04-02-1998 |
| | | DE | 69600622 T2 | 25-03-1999 |
| | | EP | 0802925 A1 | 29-10-1997 |
| | | ES | 2122774 T3 | 16-12-1998 |
| | | FI | 972764 A | 10-09-1997 |
| | | HU | 9800412 A2 | 29-06-1998 |
| | | JP | H10512009 A | 17-11-1998 |
| | | KR | 19980701272 A | 15-05-1998 |
| | | KR | 19987001272 A | 15-05-1998 |
| | | PL | 321268 A1 | 24-11-1997 |
| | | SK | 93997 A3 | 10-12-1997 |
| | | TR | 199700596 T1 | 21-02-1998 |
| | | TW | 347394 B | 11-12-1998 |
| | | US | 5888288 A | 30-03-1999 |
| | | WO | 9621678 A1 | 18-07-1996 |

Für nähere Einzelheiten zu diesem Anhang : siehe Amtsblatt des Europäischen Patentamts, Nr.12/82

EPO FORM P0461

Seite 1 von 2

**ANHANG ZUM EUROPÄISCHEN RECHERCHENBERICHT
ÜBER DIE EUROPÄISCHE PATENTANMELDUNG NR.**

EP 22 17 8959

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-09-2022

| Im Recherchenbericht angeführtes Patentdokument | Datum der Veröffentlichung | Mitglied(er) der Patentfamilie | Datum der Veröffentlichung |
|---|---|---|---|
| WO 9406530 A1 | 31-03-1994 | AT 149858 T | 15-03-1997 |
| | | AU 673540 B2 | 14-11-1996 |
| | | BR 9307031 A | 29-06-1999 |
| | | CA 2142620 A1 | 31-03-1994 |
| | | CZ 287562 B6 | 13-12-2000 |
| | | DE 660743 T1 | 15-02-1996 |
| | | DE 69308862 T2 | 07-08-1997 |
| | | EP 0660743 A1 | 05-07-1995 |
| | | ES 2100567 T3 | 16-06-1997 |
| | | FI 951245 A | 16-03-1995 |
| | | GR 3023236 T3 | 30-07-1997 |
| | | HK 1004537 A1 | 27-11-1998 |
| | | HU 217765 B | 28-04-2000 |
| | | IN 188033 B | 10-08-2002 |
| | | JP 3531746 B2 | 31-05-2004 |
| | | JP H08504223 A | 07-05-1996 |
| | | KR 950702856 A | 23-08-1995 |
| | | PL 308138 A1 | 24-07-1995 |
| | | RU 2104078 C1 | 10-02-1998 |
| | | SG 46429 A1 | 20-02-1998 |
| | | SK 35995 A3 | 07-02-1996 |
| | | TW 246677 B | 01-05-1995 |
| | | US 5534113 A | 09-07-1996 |
| | | WO 9406530 A1 | 31-03-1994 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10050997 C1
- DE 4117630
- WO 9311396 A
- WO 2004041420 A
- GB 952101 A
- DE 4441468
- WO 2013156489 A1

- EP 0356419 A2
- WO 9406530 A1
- WO 2008154668 A1
- WO 03029329 A
- WO 2006000197 A1
- WO 2007076979 A1
- WO 2013030399 A

**In der Beschreibung aufgeführte Nicht-Patentliteratur**

- **ZHANG et al.** *BioResources,* 2018, vol. 13 (2), 4577-4592
- **PARVIAINEN et al.** *RSC Adv.,* 2015, vol. 5, 69728-69737
- **LIU et al.** *Green Chem.,* 2017

- **HAURU et al.** *Zellulose,* 2014, vol. 21, 4471-4481
- **FERNÄNDEZ et al.** *J Membra Sci Technol,* 2011, vol. 4